# EUROPEAN PATENT SPECIFICATION

(11) **EP 3 646 660 B1**
(45) Date of publication and mention of the grant of the patent: **04.08.2021**
(21) Application number: 18733628.4
(22) Date of filing: 29.06.2018
(51) Int. Cl.: H04W 88/04, H04W 52/46, H04B 7/155, H04W 76/14, H04W 40/12

(54) **RELAYS AND METHODS FOR OPERATING THE SAME FOR SPONTANEOUSLY TRANSMISSION FOR RELIABLE COMMUNICATIONS**
RELAIS UND VERFAHREN ZUM BETRIEB DAVON ZUR SPONTANEN ÜBERTRAGUNG VON ZUVERLÄSSIGER KOMMUNIKATION
RELAIS ET LEURS PROCÉDÉS DE FONCTIONNEMENT POUR LA TRANSMISSION SPONTANÉE POUR COMMUNICATIONS FIABLES

(30) Priority: 29.06.2017 EP 17178874
(43) Date of publication of application: 06.05.2020
(73) Proprietor: Fraunhofer-Gesellschaft zur Förderung der angewandten Forschung e.V., 80686 München (DE)
(72) Inventor: HASSAN HUSSEIN, Khaled Shawky, 91058 Erlangen (DE); BREILING, Marco, 91052 Erlangen (DE)
(74) Representative: König, Andreas Rudolf
(86) International application number: PCT/EP2018/067576
(87) International publication number: WO 2019/002544

(56) References cited:
- WO-A1-2005/027396
- WO-A1-2016/177435
- US-A1- 2009 203 310
- US-A1- 2011 273 999
- MAINAUD B ET AL: "Cooperative communication for Wireless Sensors Network : A Mac protocol solution", WIRELESS DAYS, 2008. WD '08. 1ST IFIP, IEEE, PISCATAWAY, NJ, USA, 24 November 2008 (2008-11-24), pages 1-5, XP031448090, ISBN: 978-1-4244-2828-1
- FURUZAN ATAY ONAT ET AL: "Threshold Selection for SNR-based Selective Digital Relaying in Cooperative Wireless Networks", IEEE TRANSACTIONS ON WIRELESS COMMUNICATIONS, IEEE SERVICE CENTER, PISCATAWAY, NJ, US, vol. 7, no. 11, 1 November 2008 (2008-11-01), pages 4226-4237, XP011238623, ISSN: 1536-1276, DOI: 10.1109/T-WC.2008.070359
- TAIRAN WANG ET AL: "Smart Regenerative Relays for Link-Adaptive Cooperative Communications", INFORMATION SCIENCES AND SYSTEMS, 2006 40TH ANNUAL CONFERENCE ON, IEEE, PI, 1 March 2006 (2006-03-01), pages 1038-1043, XP031011980, ISBN: 978-1-4244-0349-3
- HAN M ET AL: "Cooperative diversity performance for OFDM transmission over partially jammed channels", AEU - INTERNATIONAL JOURNAL OF ELECTRONICS AND COMMUNICATIONS, ELSEVIER, AMSTERDAM, NL, vol. 62, no. 6, 2 June 2008 (2008-06-02), pages 464-471, XP022639637, ISSN: 1434-8411, DOI: 10.1016/J.AEUE.2007.05.012 [retrieved on 2008-05-05]

## Description

The present invention concerns the field of wireless communications and, more specifically, relays configured to forward messages in a wireless communications network. The present invention further concerns methods for operating the same and relates to non-transitory computer program products. The invention further relates to spontaneous distributed relays for reliable communication with multiple connectivity.

In ultra-reliable communications, for indoor applications or nodes which are far from the macro evolve-node base stations (eNB), data is required to be delivered with the minimum possible probability of error. Some solutions could be to guarantee a theoretically rate-less channel coding, unlimited retransmission requirements, or a cache combining (CC) diversity which requires a high diversity order. None of these solutions are feasible in indoor environments with ultra-reliable requirements as it is very common in this situation to have:
1: Short code-words with reasonably high channel code-rate,
2: A limited number of retransmissions,
3: A limited diversity order (due to weak scattering from outdoor to indoor), and
4: Weak reception power.

WO 2005/027396 A1 relates to a method and system for transmitting signals in a wireless relay network. The method and system enable two potentials, which can be offered by wireless relay systems, i.e. diversity gains and attenuation savings, to be exploited simultaneously.

US 2011/273999 A1 relates to techniques for supporting communication by a relay station are described. In an aspect, the relay station may support NACK Type 1 when operating in an amplify-and-forward (AF) mode.

Cooperative communication for Wireless Sensor Networks (Mainaud et al, Wireless days, 2008. WD'08 1st IFIP, IEEE, Piscataway, NJ, USA, 24 November 2008, pages 1-5) relates to a MAC layer scheme for a Wireless Sensor network.

Threshold Selection for SNR-based Selective Digital Relaying in Cooperative Wireless networks (Faruzan et al., IEEE TRANSACTIONS ON WIRELESS COMMUNICATIONS, IEEE SERVICE CENTER, PISCATAWAY, NJ, US) relates to selective relaying schemes based on SNR.

Smart Regenerative Relays for Link-Adaptive Cooperative Communications, INFORMATION SCIENCES AND SYSTEMS, 2006 40TH ANNUAL CONFERENCE ON, IEEE, PI, 1 March 2006 (2006-03-01), pages 1038-1043 relates to cooperation among distributed single-antenna nodes.

There is a need to enhance functionality of relay nodes of wireless communications networks.

It is an object to improve relay nodes that may be used in a wireless communications network.

This object is achieved by the subject matter as defined in the independent claims.

According to a first aspect, the inventors have found that by selecting or choosing whether or not to forward a message, based on a signal quality to the receiving node or from a transmitting node, unwanted disturbances that may interfere with other signals may be reduced or prevented so as to enhance the chance of other signal paths being successful and thereby to enhance the overall communication. This allows for a use of short code-words and thus further enhances communication.

According to a second aspect, the inventors have found that by performing power-control in the band used for forwarding the message based on a signal power of the received message, a correlation between input power and output power of the relay may be obtained such that reliability of communication is enhanced. Performing power control allows for preventing forwarding of messages having a poor quality that indicates a high probability of a defective message at the receiver and allows thus for forwarding messages having a high quality, e.g., received with a high power, a high reference signal receive power (RSRP) and/or a high received signal strength indicator (RSSI) which enhances the probability of error-free (or within the error-correction probability) reception of the message which enhances reliable communication.

Both aspects may be implemented independently from each other but may also be combined and implemented together.

An embodiment according to the first aspect is a relay that is configured to operate in a wireless communications network. The relay is configured to receive a message to be forwarded to a receiving node, e.g., on a dedicated channel (licensed or un-licensed). The relay is configured to evaluate a channel quality to the receiving node and to discard the message from forwarding when the channel quality is below a transmission threshold value. Alternatively or in addition, the relay is configured to evaluate a reception quality of the received message and to discard the message from forwarding when the reception quality is below a reception threshold value. Forwarding the message through a bad channel and/or forwarding a possibly corrupted or unusable message may lead to interference with respect to signals that are transmitted from other nodes or relays and might disturb such signals. By discarding the message, transmissions that are likely to be error-prone may be omitted which may allow increasing the chance of successful transmission for other nodes and therefore may enhance performance of the communication.

According to an embodiment, the relay is configured to receive a signal from the receiving node and to evaluate the channel quality based on the received signal prior to receiving the message to be forwarded. Alternatively or in addition, the relay is configured to receive a signal from the transmitting node and to evaluate the channel quality based on the received signal prior to receiving the message to be forwarded. The relay is configured to forward the message when the channel quality or gain is at least equal to a transmission threshold value indicating an acceptable channel quality and/or when the reception gain is greater than or equal than a threshold value. By evaluating the channel prior to receiving the message to be forwarded, the decision as to whether or not to forward the message may be performed without any further delay due to channel estimation which further enhances reliability of communication:
According to an embodiment, the relay is configured to decode the message to be forwarded and to forward the message to the receiving node only when the decoding has been successful. This may allow for an intermediate check at the forwarding node that allows discarding of messages that are already error-prone at the relay, such that a transmission of error-prone messages due to forwarding of corrupted messages may be skipped and thus may reduce or prevent interference caused thereby for other signals.

According to an embodiment, the relay is configured to store the message to be forwarded and to repeat transmission of the message to be forwarded until an acknowledgement is received from the receiving node or, until a time-out occurs. This may allow for further reliability as the relay takes care of re-transmission, which may allow for a short distance, i.e., number of hops and/or physical distance/length to be travelled by the acknowledgement and short and, thereby, fast re-transmission paths.

According to an embodiment, the relay is configured to frequency-convert the message to be forwarded from a first frequency at which the message is received to a second frequency at which the message is forwarded. This may allow adaptation of the frequency to a specific range that is suitable for the respective environment; for example, outdoor for a connection between the relay and a base station, and indoor for a connection between the relay and an indoor user equipment.

According to an embodiment, the relay is configured to evaluate a priority of the message to be forwarded and to discard the message to be forwarded when the general quality is below the threshold value and when the message to be forwarded comprises a priority below a priority threshold value. This may allow for transmission of messages to be forwarded even if a low channel quality is present in the direction of the receiving node when important messages have to be forwarded.

According to an embodiment, the relay is configured to perform power-control in the band used for forwarding the message based on a signal power of the received message. This may allow for a combination of the first aspect and the second aspect and thus for a further enhancement of wireless communications.

An embodiment according to the second aspect is a relay that is configured to operate in a wireless communications network comprising at least one band for transmitting messages. The relay is configured to receive a message to be forwarded to a receiving node. The relay is configured to perform power-control in the band used for forwarding the message based on a signal power of the received message. A power-control at the relay may allow for adjusting powers in the frequency range so as to obtain a low cross-interference between frequency bands and may thus allow for reliable communication.

According to an embodiment, the relay is configured to control the power of the forwarded message so as to be high when a signal power of the received message is high and to control the power of the forwarded message so as to be low or such that the message is not transmitted when the signal power of the received message is low. This may allow for forwarding such messages that are received with high signal power and therefore probably with good quality whilst reducing a presence of signals that were received with low power and probably low quality.

According to an embodiment, the relay is configured to control the power of the forwarded message so as to correspond to one of a multitude of power levels. This may allow for a high precision of the power control and therefore for a further increase of reliability of communications.

According to an embodiment, the wireless communications network comprises a plurality of bands. The message to be forwarded is one of a plurality of messages to be forwarded. The relay is configured to forward a message of the plurality of messages to be forwarded in each of the plurality of bands. The relay is configured to perform power-control in each of the plurality of bands. This may allow for adjusting the power of the forwarded messages so as to comprise a low cross-interference.

According to an embodiment, the relay is configured to amplify and forward the message and to apply a filter to a power level transmitted in the band so as to apply a power-filtering for the power-control. By power-filtering, the transmission power of the transmitted signal may be adapted whilst not, or only to a low amount, manipulating a wave form of the signal with respect to the information contained therein.

According to an embodiment, the relay is configured to adapt a transmission power used for forwarding the message based on information contained in the message to be forwarded or received from a node to which the message is forwarded. This may allow for controlling the transmission power in a flexible manner and may thus further enhance communication.

According to an embodiment, the relay is configured to evaluate a channel quality to the receiving node and to discard the message from forwarding when the channel quality is below a transmission threshold value and/or is configured to evaluate a reception quality of the received message and to discard the message from forwarding when the reception quality is below a reception threshold value. This may allow for preventing the network from interference caused by probably error-prone messages as described in connection with the first aspect.

According to an embodiment of the first and/or second aspect, the relays are configured to forward the message using a maximum ratio transmission of the message, wherein maximum ratio transmission is the complementary step when compared to a maximum ratio combining at the receiver. When more than one relay is transmitting the same message at the same time, MRT may be used. Additionally, the relay may to match the channel before transmitting, i.e., maximum ratio transmission (MRT) may be used for at least two receiving nodes.

A method according to the first aspect may be used for operating a relay configured to operate in a wireless communications network. The method comprises receiving a message to be forwarded to a receiving node with the relay. The method comprises evaluating a channel quality to the receiving node. The method further comprises discarding the message from forwarding when the channel quality is below a threshold value.

A method according to the second aspect may be used for operating a relay configured to operate in a wireless communications network comprising at least one band for transmitting messages. The method comprises receiving a message to be forwarded to a receiving node with the relay. The method further comprises performing power-control in the band used for forwarding the message based on a signal power of the received message.

Further embodiments relate to non-transitory computer program products that comprise a computer readable medium storing instructions which, when executed on a computer, carry out a method according to embodiments described herein.

Further embodiments are defined in further dependent claims.

Embodiments of the present invention are now described in further detail with reference to the accompanying drawings, in which:
- Fig. 1: is a schematic representation of an example wireless communications network cell;
- Fig. 2: is a schematic diagram illustrating a cell modified when compared to Fig. 1;
- Fig. 3a: is a schematic block diagram of a relay according to an embodiment, being configured to decode a received message;
- Fig. 3b: is a schematic block diagram of a relay according to another embodiment that comprises a modified sequence of evaluation of the channel quality to the receiving node and the decoding of the signal;
- Fig. 3c: is a schematic block diagram of a relay according to an embodiment, that comprises a processor being modified when compared to the processor of Fig. 3a and configured to apply at least one filter-bank;
- Fig. 4a: is a schematic block diagram of a relay according to another embodiment, that implements an Amplify and Forward functionality;
- Fig. 4b: is a schematic block diagram of a relay according to another embodiment that comprises a modified sequence of the processor and an amplifier when compared to Fig. 4a;
- Fig. 4c: is a schematic block diagram of a relay according to an embodiment, that comprises a filter or a plurality of filters;
- Fig. 5: is a schematic block diagram of a relay node according to an embodiment, that comprises a memory;
- Fig. 6: is a schematic block diagram of a relay node according to a further embodiment, which is configured to frequency-convert a received message;
- Fig. 7a: is a schematic flow chart of a method 700 for operating a relay according to an embodiment in which a channel quality is evaluated;
- Fig. 7b: is a schematic flow chart of a method according to a further embodiment in which a received message is evaluated;
- Fig. 7c: is a schematic flow chart of a method according to a further embodiment in which the channel quality and the received message are evaluated;
- Fig. 8: is a schematic diagram of an output power illustrating an obtained signal-to-noise ratio (SNR) in dB according to an embodiment;
- Fig. 9: is a schematic block diagram of a relay according to an embodiment of the second aspect;
- Fig. 10: is a schematic block diagram of the relay node of Fig. 9, configured to determine a power used for transmission based on a power of the received signal, using a lookup table;
- Fig. 11: is a schematic diagram that illustrates a correlation between an input power and an output power according to an embodiment; and
- Fig. 12: is a schematic block diagram of a relay that comprises functionality according to the first aspect and to the second aspect.

Equal or equivalent elements or elements with equal or equivalent functionality are denoted in the following description by equal or equivalent reference numerals even if occurring in different figures.

In the following description, a plurality of details is set forth to provide a more thorough explanation of embodiments of the present invention. However, it will be apparent to those skilled in the art that embodiments of the present invention may be practiced without these specific details. In other instances, well known structures and devices are shown in block diagram form rather than in detail in order to avoid obscuring embodiments of the present invention. In addition, features of the different embodiments described hereinafter may be combined with each other, unless specifically noted otherwise.

Embodiments described herein relate to relays. Such relays may be used in wireless communications networks so as to provide for an intermediate and/or spontaneous hop between a transmitting node and a receiving node. For example, in communications between a base station or evolved Node B (eNB) and a further node such as an Internet of Things (loT) device or a user equipment, such an intermediate hop may be used as repeater that allows for extending a distance that may be travelled with a wireless communications signal. According to embodiments, such a relay may also perform a frequency conversion, i.e., may receive a message on a first band or a first sub-band and may transmit the message to be forwarded on a second band or sub-band. For example, a frequency that may be used between a base station and the relay may be adapted so as to comprise a large coverage while accepting a moderate data rate. In contrast hereto, for example, in indoor environments, higher frequencies may be used so as to increase a data rate whilst accepting a shorter transmission range.

Embodiments described herein relate to wireless communications and to the field of using relays in a wireless communications network. Although some embodiments are described herein in connection with long-term evolution (LTE) standard, the teachings disclosed herein may be used without any limitation in other fields of wireless communications such as 5G or the like.

Embodiments described herein relate to a base station or eNB that transmits a message to a user equipment or end node that is a receiving node. This may be referred to as a downlink scenario. The functionality of a relay may be bidirectional such that the description that is provided herein in connection with a downlink scenario also relates to an uplink scenario in which the user equipment or end node transmits a message to a different node such a further user equipment, an loT device, a sensor/actuator or a base station. A base station may be an access point of the network.

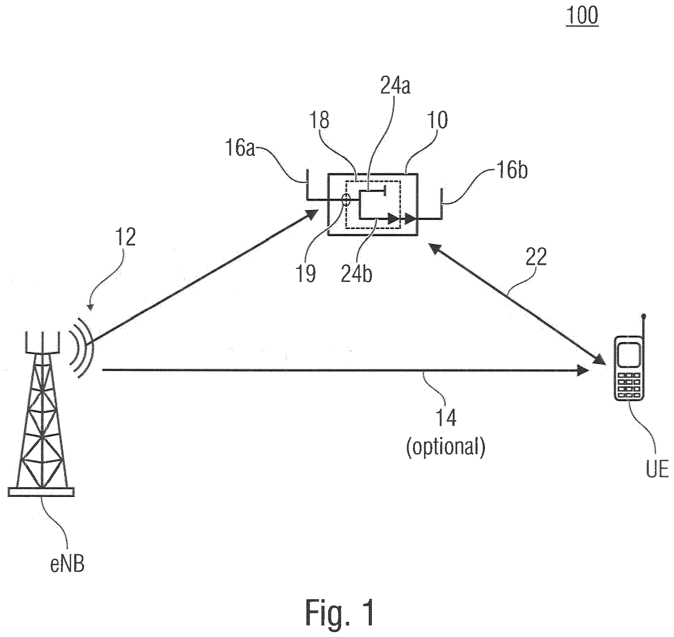

Fig. 1 is a schematic representation of an example wireless communications network cell 100 that is operated by a base station such as an eNB. A user equipment UE is located in the wireless communications network cell 100 and is associated to the eNB. Although only one eNB is illustrated, the wireless communications network cell 100 may comprise further eNBs. Although being described as being part of the same wireless communications network cell 100, the eNB and the UE may also be part of different cells of a common wireless communications network.

A relay 10 according to a first aspect described herein is part of the wireless communications network and may be part of the wireless communications network cell 100. A message or a signal 12 transmitted by the eNB may travel via an optional Line of Sight (LoS) path 14 from the eNB to the UE and may travel to the relay 10. A function of the relay 10 in the network 10 is to forward the message 12 to the UE so as to allow for a further possibility to reach the UE.

The relay 10 may be configured to receive the message 12 with a first wireless interface 16a. The message 12 may be a message to be forwarded or be forwarded spontaneously. Spontaneously may be understood as that the relay device is a native relay and put in a push-forward mode. Whenever it is activated, it forwards the message on a dedicated channel, assuming AF/DF/compress and forward, when the additional criterions are fulfilled. The relay 10 is configured to discard the message 12 from being forwarded when either the reception of the message 12 is deemed to be bad and/or when the transmission to the UE is deemed to be bad. To decide if the reception and/or the transmission is probably bad, the relay 10 is configured to evaluate the reception, the transmission respectively. The relay 10 may be configured to receive and/or transmit on a dedicated frequency being one of an unlicensed frequency, a shared frequency, a mm-wave frequency or the like.

Making reference to the transmission, the relay 10 may be configured to determine or evaluate a channel quality of a transmission channel 22 between the UE and the relay 10, for example using a processor 18 that is part of the relay 10. Suitable criterions for a channel quality may be a transmission power of a signal received from the UE at the relay 10 (received signal strength indication - RSSI), a signal to noise ratio (SNR), a signal plus interference to noise ratio (SINR), a number of bit errors in the received signal or any other value that allows for a discrimination between a reliable and a less-reliable or possibly error-prone communication. More than one criterion may be implemented. A functionality or logic of the processor 18 may comprise a first path and a second path that describes a handling 24b of the signal 12 received from the relay 10. In case of a bad channel, i.e., the channel quality of the communication channel 22 is below a transmission threshold value, the processor 18 is configured to use the other path to discard 24b, i.e., to not forward, the message 12. In case of a sufficiently good quality of the channel 22, the processor 18 is configured to forward 24a the signal or message 12 and to transmit it via a wireless interface 16b. Thus, when a quality of the channel 22 is considered to be at least equal to the transmission threshold value, the relay 10 may be configured to forward the message 12. In the other case, when the channel quality is below the threshold value, the relay 10 discards the message 12. The channel estimation may be performed once, e.g., during an initial step of introducing the relay or the UE and/or may be repeated, when required or after a specific time. The channel quality may be correlated or equal to fading coefficients. The threshold value may indicate a certain channel quality or channel gain that is associated with a categorization of being acceptable and/or suitable for reliable communication. The reception quality may be higher than or equal the acceptable sensitivity. I.e., the relay may be configured to forward the message 12 when the channel quality is at least equal to a transmission threshold value indicating an acceptable channel quality and/or when the reception gain 19 is greater than or equal than a threshold value.

Making reference now to the reception, the relay may be configured to evaluate a reception quality 19 of the received message and to discard 24a the message from forwarding when the reception quality 19 is below a reception threshold value. Suitable criterions for a reception quality may be a RSSI of the message 12, a SNR of the message 12, a SINR of the message 12, a number of bit errors in the message 12 or any other value that allows for discrimination between a reliable and a less-reliable or possibly error-prone communication. More than one criterion may be implemented. For example, when the RSSI of message 12 is below a corresponding RSSI threshold value and/or when the message 12 comprises a number of bit errors that reduces a correctness of the message below a correctness threshold value, then the message 12 may be discarded. This illustrates, that when referring to a criterion being below a transmission or reception threshold, this also applies to a complementary criterion (e.g., bit errors - correctness) that has to be at most equal to the threshold value.

The relay 10 implements at least one criterion for discarding the message 12 from being forwarded but may also implement both, i.e., the evaluation of reception and the evaluation of transmission.

In other words, it may be sufficient to estimate the total, i.e., overall, channel between the eNB, the relay node and the end-device or UE, wherein the arrangement of the relay nodes may vary the final channel matrix, i.e., the type, amount and quality of channels available, which also applies to the power that is allocated on each relay node. The channel estimation may be done only once or adapted from frame to frame on the channel variations rate and/or the power may be allocated in steps as described in connection with the embodiments referring to power-allocation.

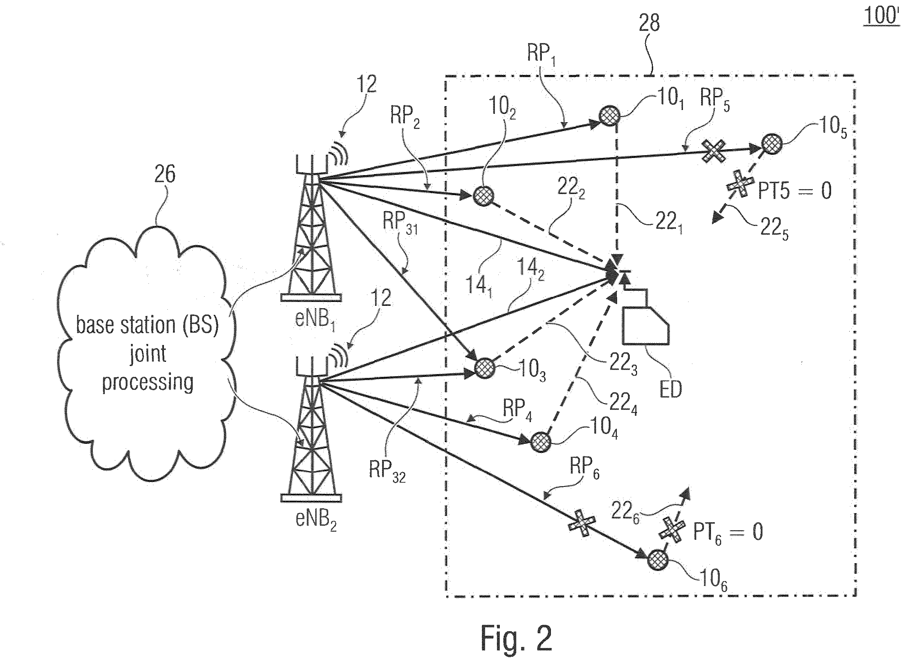

Fig. 2 is a schematic diagram illustrating a modified cell 100' that is operated by two base stations eNB₁ and eNB₂ that may be connected through a network 26 such as the internet or a backbone network that allows for a base station joint processing of the cell 100'. An end device (ED) such as the UE of Fig. 1, an loT device and/or a sensor/actuator may be located within the cell 100', for example, inside a room 28 and may thus face an indoor scenario. ED may relate to a present direction of communication from eNB₁ and/or eNB₂ to the ED (downlink). This may be different in a subsequent slot, frame or sub-frame when the ED performs uplink communication.

A number of relays 10₁ to 10₆ may be arranged in the cell 100', for example, inside the room 28, wherein one or more relays might also be arranged outside the room 28. The ED may receive signals from eNB₁ and eNB₂ through LoS paths 14₁, 14₂, respectively. Additionally, the relays 10₁ to 10₆ may also receive the message 12. There may exist scenarios in which one or more relays do not receive message12. As the respective relay is then unaware of the message 12 it will simply skip the message such that such a scenario may remain unconsidered at present. By non-limiting example only, channels 22₁, 22₂, 22₃ and 22₄ between the relays 10₁, 10₂, 10₃ and 10₄ and the ED may comprise a quality that is at least a threshold value, i.e., they may face a good channel. In contrast, the relays 10₅ and 10₆ comprise a quality of channels 22₅ and 22₆ that is below the threshold value, i.e., they may face a bad channel. Based thereon, the relays 10₅ and 10₆ may decide to discard the message 12 from being forwarded to the ED.

As will be described later in more detail, the relays 10₁ to 10₆ may receive the message 12 with a receiving power (RP) from a respective base station that may be used for RSSI at the respective relay. The relay 10₁ may receive the message 12 from eNB₁ with power RP₁, relay 10₂ may receive the signal 12 from eNB₁ with RP₂, relay 10₃ may receive the signal 12 from eNB₁ with RP₃₁ and from eNB₂ with RP₃₂. The relay 10₄ may receive the signal 12 from eNB₂ with RP₄, wherein the relay 10₆ receives the signal 12 from NB₂ with RP₆. The relay 10₅ may receive the signal 12 from eNB₁ with power RP₅. Relays that evaluate reception of the message 12 evaluate, by non-limiting example, the respective RP and possibly derive an RSSI. When the RSSI is below a threshold value, the relay node may decide to not even try to forward the signal, i.e., to discard the message 12 and as indicated by PT₅ = 0 and PT₆ = 0 and the crossed communication paths between the eNB₁ and relay 10₅, relay 10₅ and ED, the eNB₂ and relay 10₆ and between the relay 10₆ and ED.

Although RP is referenced as receiving power or a power of the received signal, embodiments described herein are not limited hereto. RP may also relate to other parameters that relate to a quality of reception; for example, a decodability of the signal. For example, when the signal may be decoded (with or without correction) at the receiving relay, then the received message 12 may be considered as having a high RP or at least an RP being above a threshold value that influences the forwarding of the received signal.

The threshold values may implement a binary decision, if the transmission should be tried or not. This allows for a suppression of noisy and error-prone transmissions such that other signals may face low interfere and may thus use short code words. As mentioned, the relay 10 implements at least one of the evaluation of the reception and the evaluation of the transmission but may also be configured to implement bot evaluations. In this case, the processor 18 may be configured us a combinatory logic such as an OR-logic with respect to the discarding. At least one of the reception and the transmission being determined to be below the respective threshold value may be sufficient to discard the message 12. Alternatively an AND-logic may be implemented, i.e., a single bad channel may be tried to compensated but both channels being bad, may lead to the decision to discard the message 12. A threshold value may be selected so as to indicate, for example, a line of side path or a path that is almost as qualitative as an LoS path (near-LoS). Thus, by evaluating the incoming or outgoing transmission against the respective threshold, relays that have LoS or near-LoS paths to the evaluated node transmit, wherein others don't. It has to be considered that some nodes such as UE may move, i.e., that a dynamic scenario is covered by the relays.

According to the second aspect that may be implemented independently or in combination with the first aspect, the relays 10₁ to 10₆ may perform power-control in a band used by the respective relay 10. In connection herewith, the relays may, for example, use a high transmission power (PT) for signals that are received with high power and a low PT for signals that are received with a low RP. When the receiving power RP is below a threshold value, the relay node may decide to not even try to forward the signal as indicated by PT₅ = 0 and PT₆ = 0 and the crossed communication paths between the eNB₁ and relay 10₅, relay 10₅ and ED, the eNB₂ and relay 10₆ and between the relay 10₆ and ED.

In other words, a first solution of the first aspect described herein relate to a quality of channels 22₁ to 22₆ between a relay 10₁ to 10₆ and the ED that is a receiver of the message 12. In case of a channel 22₁ to 22₆ being good enough or comprising a channel quality that is at least the threshold Value, the relay may decide to forward the message. According to a second solution of the first aspect the relay may consider the quality of the received signal indicated by RP. In case of a poor signal received, the relay 10₁ to 10₆ may decide to not even try to forward the received message 12. Both aspects allow for a low interference in the wireless communications network cell 100' as signals that are unlikely to successfully arrive at the ED, either due to a bad channel between the relay and the ED or based on a probably already corrupted message arriving at the relay, and remains untransmitted or unforwarded so as to avoid interferences in the wireless communications network cell caused by such transmissions. Alternatively or in addition, the relay may be configured to receive a signal from the transmitting node and to evaluate the channel quality based on the received signal prior to receiving the message to be forwarded.

In further other words, in order to solve the mentioned problems of having a limited diversity order and a weak reception power and, inherently, to solve the issue of the short code-words with reasonably high channel code-rate and the limited number of re-transmissions, the embodiments described herein allow for a spontaneous re-transmission (distributed in indoor buildings) which can perform spontaneous re-transmission adaptive to the surrounding channel conditions. Spontaneous may be understood as the base station is not knowing whether a forwarding will occur. AF/DF relays may be implanted that spontaneously forward the received message, probably on a different transmission carrier or a different unlicensed band to all users. This may include that the entire transmission band including all the allocated sub-bands is used for all users, that the entire transmitted band including all users' streams is used and/or that all uplink streams and downlink streams are used.

It should be noted that the base station might be configured to somehow control the behavior of the relay device. Alternatively or additionally, to activate or deactivate the relay function of the rely device, the base station might control via respective one or more control signals the relay device with respect to one or more of:
1) the relay mode at which the relay device performs the relay function, the relay mode between which the relay device may be switched by the base station possibly including one, two or more of AF and forward, DF and forward and compress and forward;
2) the dedicated frequency at which the forwarding is performed,
3) the power at which the forwarding is performed,
4) one or more parameters depending on which it is decided by the relay device that the reception of the message is deemed to be good so that same is to be forwarded, or bad so that is not to be forwarded, and/or that the transmission capabilities to the UE are deemed to be good so that the message is to be forwarded, or bad so that a trial to forward the message is not to be performed..

Data might not be reliable and may require lots of re-transmissions, which requires a significant delay for critical communication use cases. Instead, it is possible to transmit the first link and to retransmit the regenerated signal from different spatially distributed decode and forward (DF)/amplify and forward (AF) relay nodes, where they spontaneously retransmit the signal to the UEs after matching the signals to the UE related spatial-temporal channels. This may allow for multiple matched re-transmissions combining using such spontaneously distributed relays. This increases reliability by exploiting diversity for possibly reduced code-word length. This may be understood as using another dimension in the code/frequency/time space, an increase in each dimension allowing for an increase in the probability of error-free reception. Thus, by increasing a frequency band occupied and/or by re-transmit using another time-slot, a use of shorter code-words may be at least partially compensated or may even be overcompensated. The relay using short code words and multiple channels may allow for a channel diversity to be increased as it may be sufficient that the message is transmitted successfully over one single channel which therefore increases reliability and allows for a better protection obtained with the code word. The three dimension may be increased/decreased in any combination. Diversity may be obtained by re-transmission. More diversity order may allow for a better/higher performance with respect to short codewords.

When compared to concepts that try to enhance reliability either by:
- Reducing the coding rate significantly which results in increasing the transport size length for the same data length for the same amount of data;
- Transmission Time Interval (TTI) bundling, as sending multiple times (over multiple subframes-TTIs, i.e., multiple times) the same information as a type of redundancy or diversity which causes a huge delay and is only supported in uplink (UL);
- Providing extra, i.e., massive, diversity at the eNB, if possible;
- Reforming or organized caching which requires a long caching time, nodes cooperation, huge network overhead and accurate network organization and synchronization; or
- Shared UE-side Distributed Antenna Systems (SUDAS) using wide-band transmission, if possible.

Embodiments described herein provide a different approach to the 5G requirements that state that the machine type communication, together with many other use cases, requires ultra-reliable communication techniques. This can be achieved by:
- Either a capacity approaching channel coding scheme; and/or
- Utilizing more dimensions of diversity.

Therefore, it is proposed to impose a structured diversity by retransmitting the important information from different spatial (sufficiently) far allocated relays. Hence, it is suggested to implant multiple decode and forward (DF) and/or amplify and forward (AF) relay nodes (RN) surrounding a possibly critically communicating node or a plurality of nodes such as user-equipments. The base-station(s) and/or access point(s) transmit reliable communication messages on prescheduled reliable physical resource blocks (PRBs). Those PRBs are captured by the intended machine/UE and/or a distributed set of implanted AF/DF relay nodes. These relay nodes retransmit the captured data "matched" to the channel between the relays and the destination node, for example, by applying a maximum-ratio transmit (MRT) beamforming. Using inband filtering one or more PRBs may be excluded of cut out. Those PRB may be reassigned to other users/purposes. For example, the relay have knowledge that the current message is a reliable message, i.e., that efforts have to be made to successfully forward the message. Such information may be obtained, for example, as part of the decoded message. Based thereon, the relay may have instructions that it has to retransmit the message. Alternatively, in an amplify and forward scenario, the relay may see by the signal power that there is a need for retransmission. The relays may cut PRBs without decoding/reading inband transmission and may retransmit on different slots/times/frequencies as described above. The relay may be configured to out only those PRB that are associated with reliable communication PRB where they are transmitted, for example, by shifting them to another frequency. A PRB may be a physical resource block composed of 7 OFDM symbols and 12 subcarriers carries data, control, and reference symbols.

The relays may retransmit the message on another frequency range that may be suggested to be smaller than 6 GHz or at an MM-Wave, where only relays with LoS or near LoS reachability are supposed to retransmit the received message. The ED may be configured for combining received messages. This may be done using one of a plurality of mechanisms, for example, for ultra-reliability with a sub-6 GHz, the DF nodes may repeat the message only once on the same frequency, letting them all be combined at the receiver front-end, for example, due to synchronization. Combining the messages will enhance the reliability even for short code-words. For ultra-reliable communication, a repetition of the signal may be expanded in the frequency domain in case of dual connectivity with multiple carrier components in the sub-6 GHZ band, in unlicensed bands and/or in MM Wavebands. The received messages may be spent on the wide band of the MM Waveband and may be digitally combined performing the same effect of the MRC (maximum ratio-combining). If the base-stations or access-points continue to transmit more messages, the relays may continue to transmit to the required terminal, sensor and/or actuator until the burst transmission is finished. Extra redundancy, e.g., incremental redundancy, may be transmitted from the relay nodes on different frequency bands or in extra bands, e.g. in MM Wave.

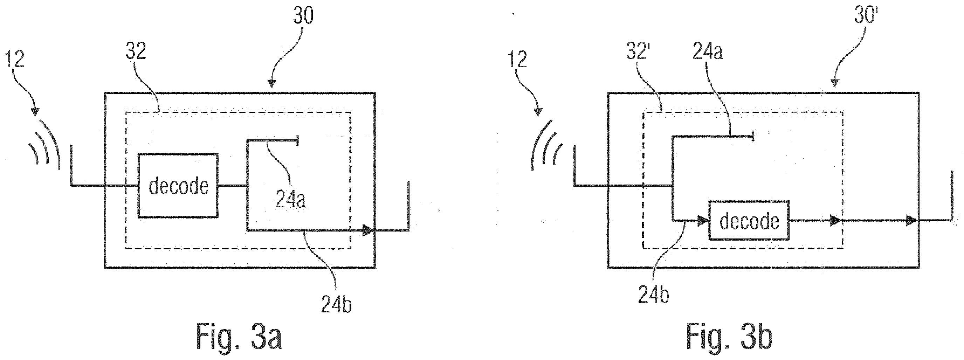

Fig. 3a is a schematic block diagram of a relay 30 according to an embodiment. When compared to the relay 10, the relay 30 may comprise a processor 32 that is configured to decode the received message 12. After a successful decoding, the processor 32 may be configured to evaluate the channel quality to the receiving node, i.e., to decide whether to use path 24a or 24b. Thus, only successfully decoded messages 12 that may be transmitted by a sufficiently good channel to the receiving node are forwarded by the relay 30.

Fig. 3b is a schematic block diagram of a relay 30' that comprises a processor 32' being modified when compared to the processor 32 of Fig. 3a. In particular, an order or sequence of the evaluation of the channel quality to the receiving node and the decoding is changed. I.E., according to Fig. 3b, only such messages are decoded that would face a sufficiently good channel to the receiving node.

Decoding the message 12 may allow for evaluating a priority of the message 12 or other information that indicates a necessity of forwarding the message 12 such as a level of requested Quality of Service (QoS). When compared to simply regard a signal power during reception also further quality aspects may be evaluated such as bit errors. Furthermore, such errors may be corrected. The processor 32 or 32' may be configured so as to adapt the threshold value that is applied for determining whether to use path 24a or 24b based on the priority information. According to one example, the relay is configured to evaluate the priority of the message 12 and is configured to discard the message to be forwarded when the channel quality is below the threshold value and when additionally the message to be forwarded comprises a priority below a priority threshold value. I.E., the processor 32 or 32' may be configured to apply two threshold values that have to be passed by the message 12. This may be combined with each other such that the priority information at least influences the threshold value that is used for discriminating between path 24a and 24b, i.e., a more important message allows for a use of a channel that comprises a lower quality, wherein normal or unimportant messages have to face a high channel quality.

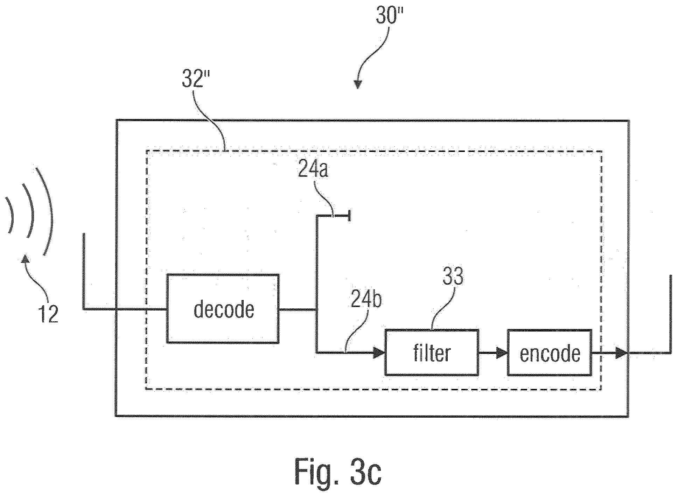

Fig. 3c is a schematic block diagram of a relay 30" that comprises a processor 32" being modified when compared to the processor 32 of Fig. 3a. The processor 32" is configured to apply at least one filter of a filter-bank on the decoded message, wherein this may be done before or after the decision relating to forwarding or discarding. By applying a filter, power control may be applied as described in connection with the second aspect. The processor 32" is, independent from the filter-bank 33 configured to encode the message before transmission. This is also applicable to other processors for DF such as processor 32 or 32'.

The relays 30, 30' and/or 30" therefore forward only such messages that are correctly decoded and that may be transmitted via a sufficiently good channel. Relays 30 and 30' may be DF relays or provide at least for such a functionality, i.e., they may decode and evaluate the received messages and afterwards encode, i.e., generate, a message that is to be transmitted.

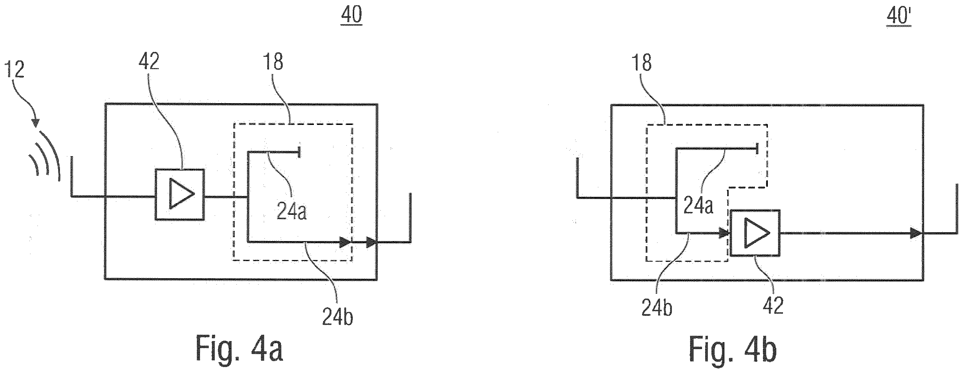

Fig. 4a is a schematic block diagram of a relay 40 according to another embodiment that implements an AF functionality. The relay 40 may comprise an amplifier 42 that is configured to amplify the message 12, wherein the processor 18 is configured to forward the amplified message 12 when the channel to the receiving node is sufficiently good.

Fig. 4b is a schematic block diagram of a modified relay node 40' in which the order or succession of the processor 18 and the amplifier 42 is changed, i.e., only such messages that face a sufficiently good channel to the receiving node are amplified by the amplifier 42 before being forwarded.

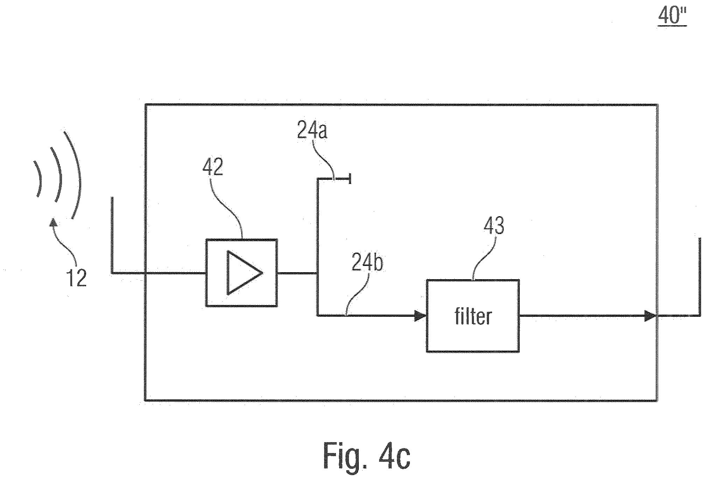

Fig. 4c is a schematic block diagram of a relay 40" that comprises a filter 43 or a plurality of filters. The relay is configured to apply at least the filter 43 so as to manipulate a power of the transmitted signal, e.g., to perform power control as described in connection with the second aspect. This allows to adapt a power transmitted in the at least one band and to apply a power-filtering for the power-control. Applying the filter may be done before or after the decision relating to forwarding or discarding.

The relays 40, 40' and/or 40" may be combined with a DF functionality of a relay 30 or 30'.

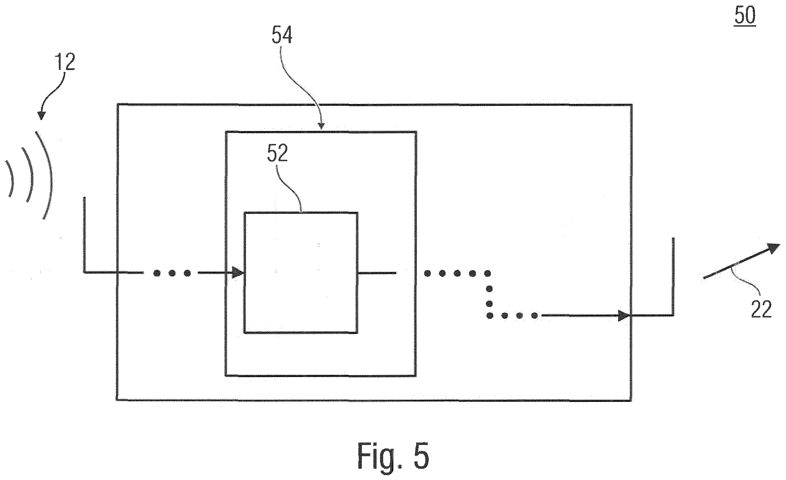

Fig. 5 is a schematic block diagram of a relay node 50 according to an embodiment that comprises a memory 52 that is configured to store the message 12, a signal encoded based hereon, and/or an amplified version of the message 12. A processor 54 of the relay node 50 may be configured as described for the processor 18, 32 and/or 32' and may be configured to store the message to be forwarded in the memory 52. This allows for a retransmission of the message to be forwarded through the respective channel 22. For example, when forwarding the message 12, the processor 54 may be configured to await for an acknowledging message (ACK). As long as the acknowledgement isn't received, and/or until a timeout of a timer of the relay node 50, the processor 54 may be configured to repeat the transmission of the message to be forwarded. This may allow for a shorter re-transmission distance and thus for a low amount of obstacles and other error sources as well as for a short travel time of signals and thus for a low amount of time for re-transmission.

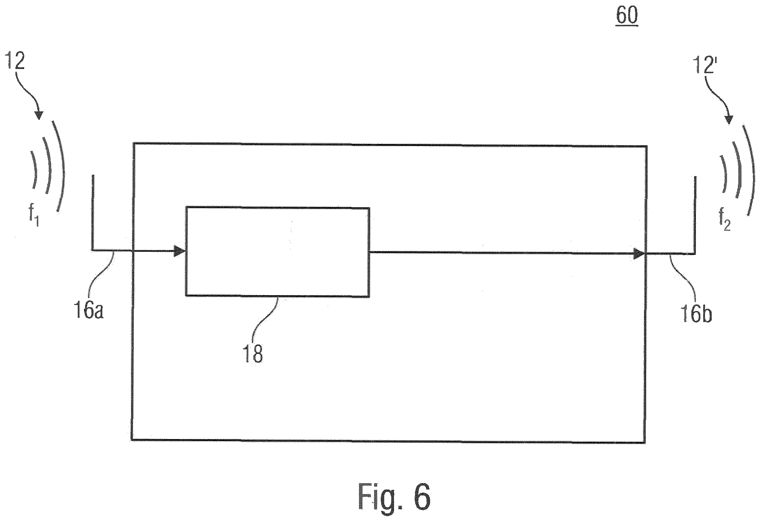

Fig. 6 is a schematic block diagram of a relay node 60 according to a further embodiment that is configured to frequency-convert the message 12 to be forwarded from a first frequency range f₁ at which the message 12 is received to a second frequency range f₂ at which the message 12' is forwarded. The frequency ranges f₁ and/or f₂ may be so-called transmission bands or sub-bands. Between the message 12 and the transmitted message 12' there may thus be a frequency-shift that allows for adapting the frequency of transmission to a scenario or environment of the relay node 60 and/or of the node that is determined to receive the message 12'.

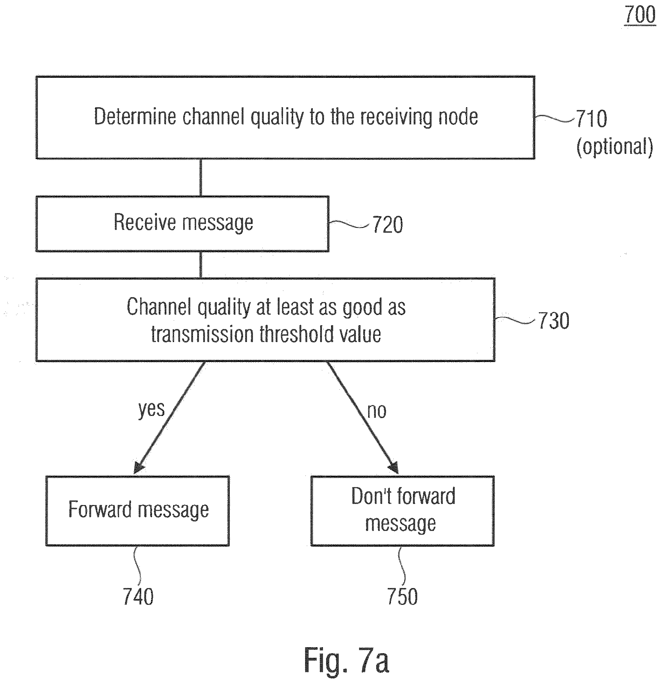

Fig. 7a is a schematic flow chart of a method 700 for operating a relay such as the relay 10, 30, 30', 40, 40', 50 or 60 that is configured to operate in a wireless communications network and to evaluate the channel quality to the receiving node. In a step 710 the channel quality to the receiving node such as the ED or UE is determined. For determining the channel quality to the receiving node a signal or a message may be received from the receiving node. The relay may be configured to assign a high channel quality to a high signal strength and to assign a low channel quality to a low signal strength of the signal received from the receiving node. As mentioned before, the signal strength may also relate to a number of bit errors, an amount of interference or other quality criterions. The step 710 is an optional step that may be performed before receiving the message to be forwarded in a step 720, i.e., optionally, the relay may be configured to receive the signal used for evaluation of the channel quality and may evaluate the channel quality based on the received signal prior to receiving a message to be forwarded. The channel quality may also be obtained by reception of such information from a further network node such as eNB.

In a step 730, the relay node determines if the channel quality to the receiving node is at least as good as a threshold value. As mentioned before, this threshold value may be influenced by a priority of the message received in step 720. If the channel quality is good enough, then the message is forwarded in a step 740. If the channel quality is not good enough, then the message is discarded, i.e., the message is not forwarded, in a step 750.

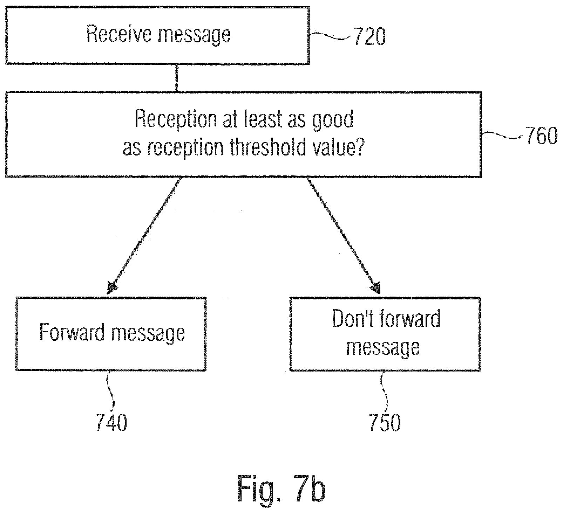

Fig. 7b is a schematic flow chart of a method 700' for operating a relay such as the relay 10, 30, 30', 40, 40', 50 or 60 that is configured to operate in a wireless communications network and to evaluate the received signal. When compared to method 700, a step 760 may be performed alternatively or in addition to step 730. In step 760, the relay determined, if the reception of the message such as message 12 is at least as good as the reception threshold value. The result may determine whether to perform step 740 or step 750, i.e., whether to forward the message or not.

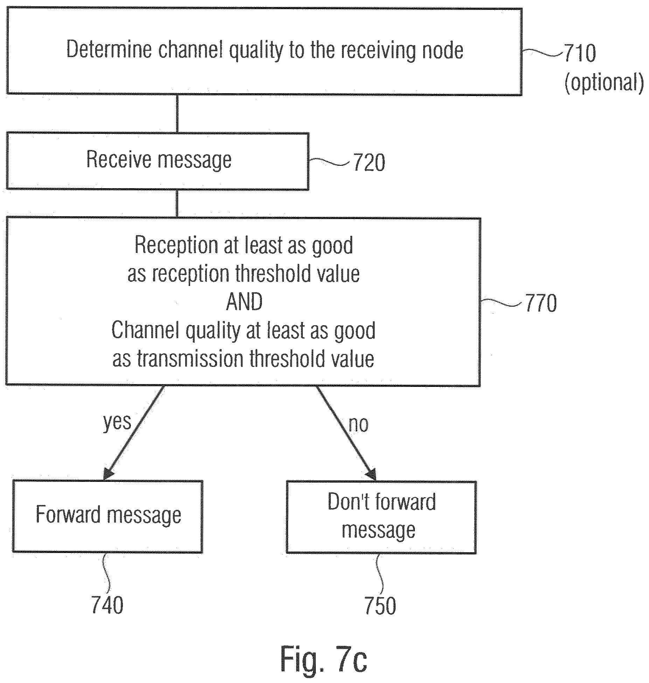

Fig. 7c is a schematic flow chart of a method 700" for operating a relay such as the relay 10, 30, 30', 40, 40', 50 or 60 that is configured to operate in a wireless communications network. The relay is configured to evaluate the received signal and to evaluate the channel quality to the receiving node in a step 770. In the step 770, the relay node further determines if the channel quality to the receiving node is at least as good as a threshold value. The step 770 may be performed instead of the step 730 when compared with method 700 or instead of step 760 when compared with method 700'.

In other words, one core solution may be summarized in the following points: a sign distributed/implanted dual connecting (DC) DF/AF relay nodes in the field of possible reliable communication. Those relay nodes may operate in both directions, i.e., uplink and downlink, with different frequencies. The reliable communicating UE terminals, sensors and/or actuators are also deployed to have different RF (radio frequency) front ends with dual connectivity if possible or required, i.e., they may connect to transmission bands of which at least one may mutually be connected to an eNB, an access-point, a single relay and/or multiple relays. The relay nodes may receive, in the first transmission bounce (hop), the messages sent to it from one or more access-points or base-stations that may be synchronized or quasi-synchronized in case of DF. Delays between the relay nodes may be assumed to be compensated in the cyclic prefix when assuming that multi-carrier communication is used. However, synchronization is not very essential in AF relays, i.e., for AF relays, synchronization is not required as the signal is spontaneously forwarded without significant amount of intermediate frequency (IF), i.e., without significant conversion in bands between a baseband and a transmission band. The relay nodes may try to synchronize themselves, if synchronization is required or requested, using the synchronization patterns in the eNB or the access-points. Accurate phase coherence is not needed to be considered. At the same time, the surrounding or implanted relays receive spatially uncorrelated versions of the same messages sent to the intended sensors or UEs as illustrated in Fig. 2. The relays may set up the channel threshold value, i.e., a threshold Gain and/or a minimum received radio-signal strength indicator (RSSI). Hence, the relay nodes may, in DF mode, receive all the messages and decode, for example, using the quadrature amplitude modulation level or based on the decode and forward capabilities. Only the ones that receive the message with high RSSI at the relay node input and/or determine a high channel gain monitored between the relay node and the intended user, e.g., |hⱼ|² ≧ threshold Gain will retransmit the message, wherein hᵢ indicates the i-th channel between the relay and the receive antenna at the intended user. The last point allows to perform retransmission without any further effort for the relay selection by the access-point or base-station of the UE. The threshold Gain may be selected to guarantee reliable maximum ratio combining at the receiving node If the gain is above the threshold, the channel may be considered as being good. The threshold may be selected, for example, so as to allow for a probability of successful transmission being above 95 %, above 99 % or above 99.99 %. For this, the power control has to be adjusted as will be described later. In AF mode, the forwarding of the messages received may be performed without decoding and after monitoring the received RSSI and/or the channel gain to be |hᵢ|² ≧ threshold Gain between the relay and the UE.

In further other words, the relay nodes may decode completely to the last bit and check the cyclic redundancy check (CRC) for example. In this case, erroneous frames are not retransmitted back to the UEs. The level of decoding the frame may be set based on the nature of the RN network. Alternatively or in addition, the level of decoding may be set based on the IQ samples and/or based on the used codeword. Other simple decoding cases may be used, e.g., up to the quadrature amplitude modulation symbols (QAM symbols). Relay nodes may, for example, only decode the headers and retransmit based on RSSI and/or the power control mechanism that will be described later. In case of AF, analog waveforms may be forwarded directly to each UE after the retransmitted signals are matched to the spatial-temporal pattern and after the IQ signal is combined to the receiver coherently due to maximum ratio-combining transmission mechanism (MRT). When more than one relay is transmitting the same message at the same time, MRT may be used. Additionally, the relay may to match the channel before transmitting, i.e., maximum ratio transmission (MRT) may be used for at least two receiving nodes. The power of the amplifier may be adjusted based on the relay node-to-user equipment channel gain (|hⱼ|) and/or the RSSI.

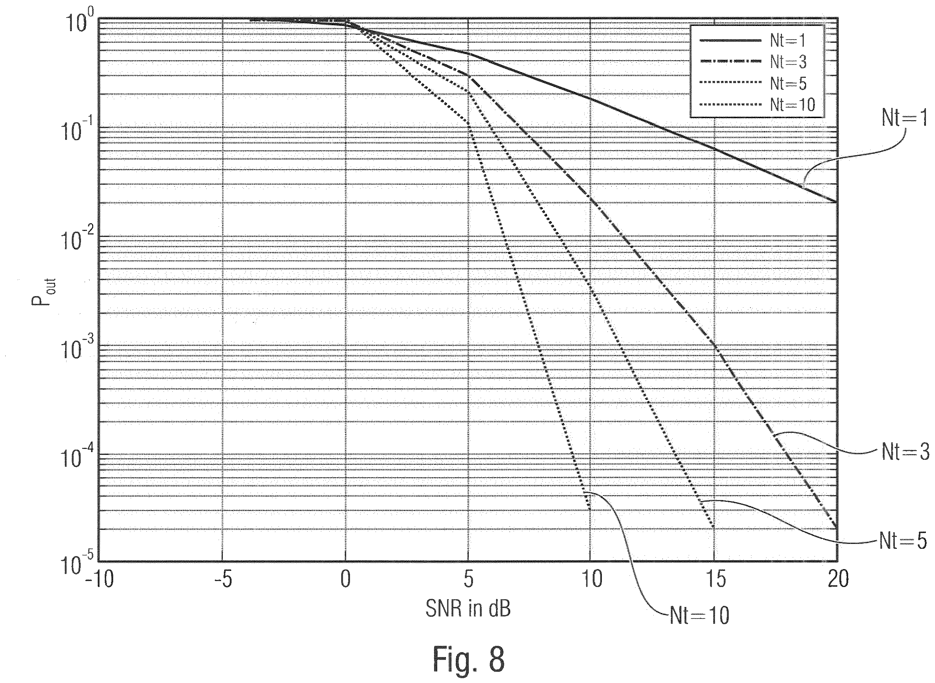

Fig. 8 is a schematic diagram of an output power Pₒᵤₜ over an obtained signal-to-noise ratio (SNR) in dB and thus displays transmission diversity with Rayleigh IID (independent and identically distributed) channel and isotropic power transmission. The diagram shows the outage probability to achieve a rate of 1/8 bits/sec/Hz where the gain between no relays (NT=1) and two relays (NT=3) is more than 20 dB, increasing the number of relays to 4 (equally distributed with NT=5) may allow for another 10 dB of gain. NT describes the numbers of receive antennas including the receiver itself, i.e., NT-1 is a number of additional antennas/relays. Pₒᵤₜ relates to an outage probability, i.e., a probability that the transmission is not good enough as required and/or that the probability of the reception is under a certain threshold. Is the equally distributed arrangement of relays related to a spatial distribution? The channel is assumed to be a simple single path relay fading channel. Here and for the same assumed channel code-word length and code-rate, the reliability increased only be increasing the diversity order.

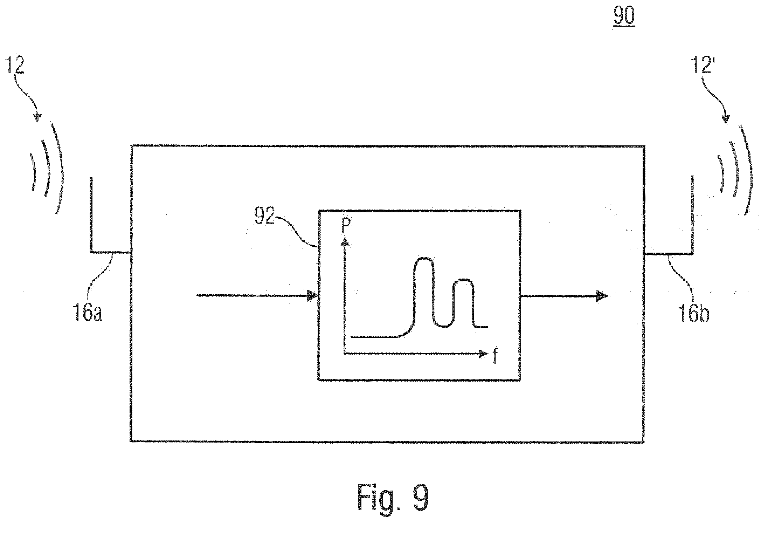

Fig. 9 is a schematic block diagram of a relay 90 according to an embodiment of the second aspect. The relay 90 may be present in addition or substituting one of the relays 10₁ to 10₆ in Fig. 2. The relay 90 is configured to operate in a wireless communications network that comprises at least one band for transmitting messages. A band may be a frequency range that is used for data transmission, wherein a data transmission may be performed in at least a part of the band, i.e., a subband. The relay 90 is configured to receive the message 12 and to forward the message 12 to a receiving node such as the ED. The relay 90 is configured to perform power-control in the band that is used for forwarding the message 12. The power control is performed based on a signal power of the received message 12.

Basically, power control may be understood as performing a threshold-decision whether a message is to be forwarded or not. For example, in an amplify and forward scenario, the spectral components of a received message are amplified and then the amplifies message is re-transmitted. Thereby also noise-components are amplified which may lead to a decrease of the SNR. Furthermore in a message having an already low SNR such that successful reception is unlikely, power for amplifying may be wasted as the amplified message won't be received successful. Such information may be exploited by the relay. The relay may be configured to skip or prevent the message from amplification and/or forwarding when a quality parameter such as a signal power or a SNR is below a threshold value which may indicate a poor quality. In decode and forward scenarios the same and/or further parameters may be used such as bit errors, i.e., a message that has exceed the number of errors compensable by the used code may be dropped.

Performing power control allows for preventing forwarding of messages having a poor quality that indicates a high probability of a defective message at the receiver and allows thus for forwarding messages having a high quality which enhances the probability of error-free (or within the error-correction probability) reception of the message which enhances reliable communication.

The relay 90 may comprise a processor 92 that may be configured according to the description made with reference to processors 18, 32, 32' or 54. The processor 92 is configured to perform the power-control for the band used with the wireless interface 16b that accesses a transmission band such as a sub-six GHz band or mmWave band. Power control may be performed by the processor 92 with respect to a single message 12 that is transmitted and/or to a multitude of messages that are transmitted. For example, according to the present scenario, the processor 92 may be configured to adapt a transmission power of the forwarded signal 12' so as to comply with predetermined criteria.

The first and the second aspect may be combined with each other. Thus, the relays described in connection with the first aspect such as the relays 10₁ to 10₆ of Fig. 2 may be configured to apply a power control mechanism.

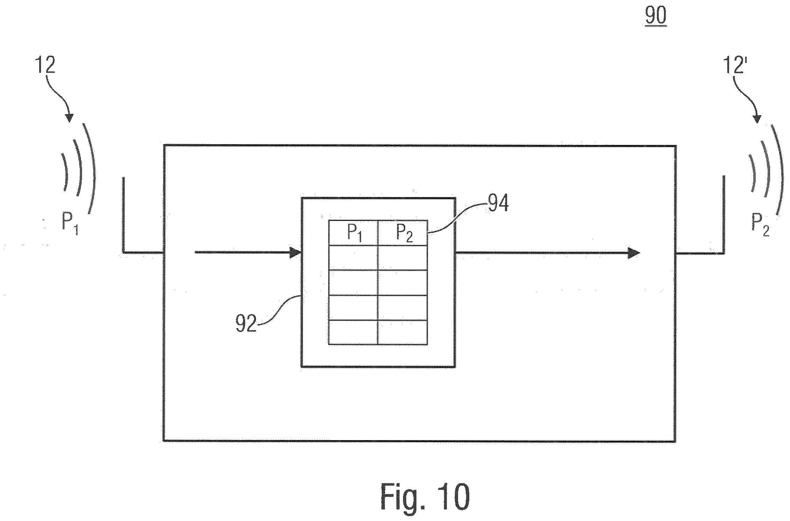

Fig. 10 is a schematic block diagram of the relay node 90 of Fig. 9, wherein the received signal 12 comprises a first power P₁ and the forwarded signal 12' comprises a different signal power P₂, wherein the processor 92 may be configured to determine the power P₂ based on the power P₁ using a lookup table 94 that has stored therein a relationship between a signal power P₁ that is received and a signal power P₂ that has to be used in the specific band or subband for transmission of the message 12'.

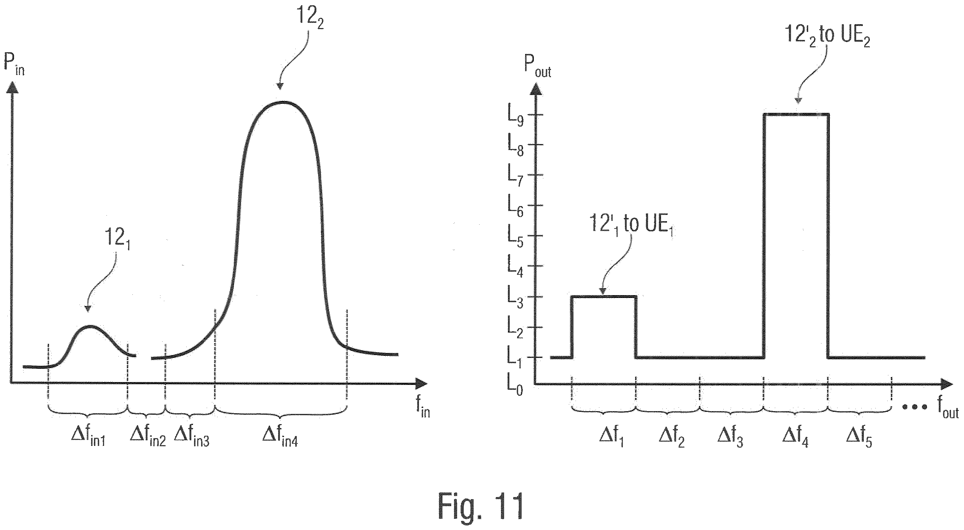

Fig. 11 is a schematic diagram that illustrates on the left-hand side a correlation between an input power Pᵢₙ that may be P₁ over a frequency band fᵢₙ in which at least one message 12 is received. In Fig. 11, reception of two messages 12, namely 12₁ and 12₂ in the frequency band fᵢₙ is illustrated, wherein the message 12₁ comprises a lower signal power when compared to a message 12₂. The message 12₁ is received so as to occupy at least a frequency of sub-band or carrier Δfᵢₙ₁, wherein the message 12₂ is received so as to at least occupy a frequency of sub-band or carrier Δfᵢₙ₄. In this example, carriers Δfᵢₙ₂ and Δfᵢₙ₃ may be unused.

On the right-hand side, Fig. 11 illustrates a possible result of the power-control performed by the processor 92 and the relay 90, respectively.

The relay may be configured to control an output power Pₒᵤₜ that may be P₂ of the forwarded messages 12'₁ and 12'₂ such that the signal power Pₒᵤₜ of the message 12'₂ is high due to the received signal power Pᵢₙ of the message 12₂ being high. Accordingly, the signal power of the message 12'₁ is comparatively low as the signal power Pᵢₙ of the message 12₁ is low. In addition, the processor 92 may be configured to apply a threshold value such that, when the power Pᵢₙ is below the threshold value, the output power Pₒᵤₜ of the message to be forwarded is set to zero which correspond to discarding the message. In the frequency band used by the wireless interface 16b, different subbands DF₁ to DF₅ may be used for forwarding the messages 12'₁ and/or 12'₂, wherein a size or order of the frequency bands may be equal or different to a size or order of frequency bands or subbands used at the input side for receiving the messages 12₁ and 12₂. As indicated by levels L₀ to L₉, the relay may be configured to control the power of the forwarded message 12'₁ and/or 12'₂ so as to correspond to one of a multitude of power levels, wherein the processor is configured to use at least three, at least five or at least ten power levels. This may allow for a precise power control. The relay may be configured to associate power levels and/or frequency bands (receiving and/or transmitting) with a specific node or user. Based on an association of a frequency band to a specific user, requirements of the user, e.g., allowing for a comparatively low signal power in case of reception and/or requiring a comparatively high reception power, may be considered, i.e., some users may be handled so as to being served with a higher power for a same message when compared to other users. Such requirements may be communicated from the receiving node to the relay.

The relay 19 may perform power-control for a single message 12 and/or may perform power-control for a plurality of messages as described in connection with Fig. 11. In such a case, the wireless communications network may comprise a plurality of bands or subbands. The message to be forwarded is one of a plurality, i.e., at least two, at least three or at least four messages to be forwarded. The relay is configured to forward the message 12'₁ or 12'₂ of the plurality of messages to be forwarded in each of the plurality of bands. The relay is configured to perform power-control in each of the plurality of bands or subbands, at least in the bands used for forwarding the messages 12'₁ and 12'₂. Nodes such as user equipment, sensors or actuators that use a static frequency may exist. Thus, the static frequency may be assigned to a specific user. The relay 90 may be configured to associate a first band DF₁ to DF₅ or fᵢₙ₁ to fᵢₙ₄ to a first apparatus and a different band to a different apparatus. This may allow for handling messages from or to such an associated device individually, for example, when considering individual requirements. For performing power-control, the relay 90 may be configured to apply an amplification and forward (AF) to the message. The relay may apply a filter to a power transmitted in the band DF₁ to DF₅ or a band of a respective center frequency in the carriers Δfᵢₙ₁ to Δfᵢₙ₄. As the relay 90 may perform bidirectional communication just as the other relays described herein, descriptions made in connection with an input band or an output band apply without limitations to the respective other band. By using a filter for power-filtering, power-control may be implemented. This may allow for influencing the transmitted power without changing other properties of the transmitted wave or signal. For example, the levels L₀ to L₉ may at least partially be correlated with different filters that may absorb parts of the power generated by a digital circuit, for example.

Alternatively or in addition, the relay 90 may be configured to adapt a transmission power used for forwarding the message 12'₁ and/or 12'₂ based on information contained in the message or based on information received from a node to which the message is forwarded. For example, the message may contain information referring to a priority class or a quality of service and may thus indicate by a high priority class or by a high required quality of service that a high transmission power shall be used. For example, different classes of priority or QoS may be considered or incorporated as a multiplicator for a level that is obtained in the look-up table 94. Other possibilities to incorporate the priority class or the requested quality of service may alternatively or in addition be incorporated. Such information indicated in the message itself may also be received from the receiving node, for example, during an exchange of information for channel estimation as described in connection with the first aspect of the present disclosure. Applying a power-filter to the message to be forwarded may be performed, for example, for an AF-operation of the relay. In connection with a DF-operation the relay may be configured to decode the message to be forwarded and to adapt a transmission power used for forwarding the message by applying a filter-bank, i.e., a digital to filter, on the decoded message.

The different power steps may be adapted based on the received powers from either the base station (in downlink) and/or the ED (on uplink). The power of the EDs are measured during uplink training, where the relay that receives low power from majority of the active EDs on a certain band, i.e., lower than the input power, may reduce or switch off the transmission for a specific band. Each band may be allocated to a single user, i.e., to physical resource blocks. Beam forming at the base-station will respond to the relay nodes power-control.

Hence, the channel may be the resultant channel between the BS and the relay nodes (RNs), aggregated to the channel between the RNs and the end users (ED), i.e., including the power control between the RN and the ED. Similarly, in opposite direction, the uplink (UL) channel and the UL beamforming will be the resultant of the aggregated channel including the power control of the RNs to the BS this time. Although only having described such a single and easy power control mechanism, a more sophisticated power control mechanism may also be applied, for example, based different optimized power control, i.e., linear-programing, geometric programming, convex optimization, etc..

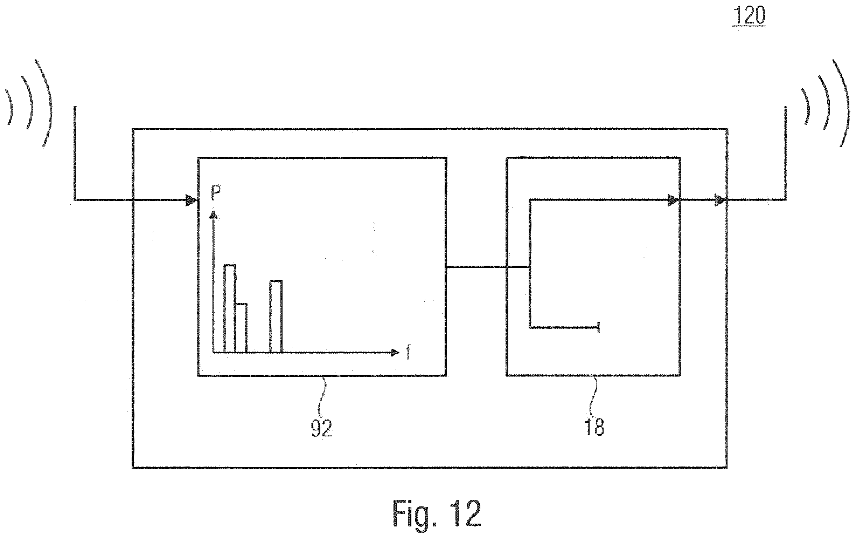

Fig. 12 is a schematic block diagram of a relay 120 that comprises functionality according to the first aspect and to the second aspect. For example, when compared to the relay 90 the relay 120 may further be configured to decide to discard the message based on a low received power and/or based on a low channel quality to the receiving node. For example, the first aspect may be combined with the second aspect and vice versa.

A method for operating a relay according to the first aspect comprises receiving a message to be forwarded to a receiving node with the relay. The method further comprises evaluating a channel quality to the receiving node and discarding the message from forwarding when the channel quality is below a threshold value or comprises evaluating of a reception quality of the message to be forwarded and to discard the message from forwarding when the reception quality is below a threshold value.

A method for operating a relay according to the second aspect comprises receiving a message to be forwarded to a receiving node with the relay. The method further comprises performing power-control in the band used for forwarding the message based on a signal power of the received message.

The method for operating the relay according to the first aspect and/or the method for operating the relay according to the second aspect may be performed so as to operate the relay in an indoor environment. A channel between the relay and the receiving node may thus be indoor, in the cabin and/or in the hall, wherein a channel between a base station and the relay is one of indoor, outdoor and outdoor-to-indoor

However, for DF, a simple symbol based decoding may be sufficient to synchronize with training symbols transmitted from each base station on each available band. However, even not accurate, it is still sufficient to have relay nodes delays as long as it is less than the cyclic prefix assuming that a cyclic prefix is based on a multicarrier transmission.

In embodiments, it can be applied a simple in-band power allocation mechanism as follows: An in-band power allocation may be adapted in a DF scenario such that a simple decoding of the user granted sub-bands in downlink is obtained or based on end device specific feedback to the relay for uplink and downlink. A power allocation may alternatively or in addition be performed directly on the decoded multi-band using filter-banks or, if possible, on a multi-carrier level. For in-band power control, in the second bounds (hop) communication, i.e., from relay to receiving node such as UE, the sensor/actuator may receive the signal after retransmission from all successful DF relay nodes matched to the channel between the DF-relay. In-band power allocation may be adapted in an AF scenario such that a simple sharp in-band filtering is applied in AF and/or such that power is adapted based on ED specific feedback.

The embodiments described herein may assume that all relays may, if needed, synchronize to the eNB/access points, if the eNB/access points transmit a synchronization pattern. For VF, the delays between the relays (belonging to the same transmission) should not exceed the cyclic-prefix (CP) assuming a CB-based multicarrier waveform. AF relay nodes may remain unsynchronized if their propagation delay differences are less than the cyclic prefix. All relay nodes may be operated in DF mode and/or AF mode. All relay nodes are required to measure or know the relay node to receiving node channel and its gain in both directions assuming FDD (frequency division duplex) or only one direction (assuming TDD - time division duplex). All relay nodes are required to measure the RSSI for signals sent from eNB nodes or user equipments. ED/UEs are not required to be aware of the relay node network architecture or even their existence. eNB/access-points are not aware of the relay node network architecture or even their existence. Further to the embodiments described above, a first hop may be received by everyone. If decoded by the intended terminal/sensor/actuator, then the goal of transmitting a message is already achieved. If not, more signals may have been captured by multiple receivers assuming selection diversity by suppressing weaker links. In the second bounce, the signal transmitted from the relay, more accurate mmWave signals from a multi-synchronized system may be transmitted over statistically independent channels achieving low outage probability for a certain given capacity (i.e., due to transmit diversity and combating multipath in fading). If the total power of the transmitting RN is limited to a limited overall power, no significant ergodic capacity gain can be achieved. However, if the total power constraint is increased due to, e.g., serving high quality user, ergodic capacity can be noticed. However, the outage capacity and the performance for a selected modulation coding scheme may be ensured or guaranteed. If the terminal/sensor/actuator is equipped with a receiver antenna array with digital, analog or hybrid beam forming, a more increased processing gain may be achieved. Embodiments described herein may be used in application fields such as mission-critical communication services, latency-critical communication services with short code words, multilevel QoS services, ultra-reliable communication, indoor communication, far nodes coverage, cell-edge coverage and/or wireless caching.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Depending on certain implementation requirements, embodiments of the invention can be implemented in hardware or in software. The implementation can be performed using a digital storage medium, for example a floppy disk, a DVD, a CD, a ROM, a PROM, an EPROM, an EEPROM or a FLASH memory, having electronically readable control signals stored thereon, which cooperate (or are capable of cooperating) with a programmable computer system such that the respective method is performed.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

## Claims

1. A relay (10; 30; 30'; 30"; 40; 40'; 40"; 50; 60; 120) configured to operate in a wireless communications network;
wherein the relay is configured to receive a message (12) to be forwarded to a receiving node (UE; ED); and
wherein the relay is configured to evaluate a channel quality to the receiving node (UE; ED) and to discard (24a) the message (12) from forwarding when the channel quality is below a transmission threshold value; and/or
wherein the relay is configured to evaluate a reception quality (19) of the received message and to discard (24a) the message from forwarding when the reception quality (19) is below a reception threshold value;
wherein the relay is configured to evaluate a priority of the message (12) to be forwarded and to discard (24a) the message (12) to be forwarded when the channel quality is below the transmission threshold value and when the message (12) to be forwarded comprises a priority below a priority threshold value; or wherein the relay is configured to adapt the transmission threshold value based on the priority.

2. A relay (90; 120) configured to operate in a wireless communications network comprising at least one band (fᵢₙ, fₒᵤₜ) for transmitting messages (12₁, 12₂);
wherein the relay is configured to receive a message (12₁, 12₂) to be forwarded to a receiving node (UE; ED);
wherein the relay is configured to perform power-control in the band (fₒᵤₜ) used for forwarding the message (12₁, 12₂) based on a signal power (Pᵢₙ) of the received message (12₁, 12₂); and
wherein the relay is configured to control the power (Pₒᵤₜ) of the forwarded message (12₁, 12₂) so as to be high when a signal power (Pᵢₙ) of the received message (12₁, 12₂) is high and to control the power (Pₒᵤₜ) of the forwarded message (12₁, 12₂) so as to be low or such that the message (12₁, 12₂) is not transmitted when the signal power (Pᵢₙ) of the received message (12₁, 12₂) is low.

3. A relay (90; 120) configured to operate in a wireless communications network comprising at least one band (fᵢₙ, fₒᵤₜ) for transmitting messages (12₁, 12₂);
wherein the relay is configured to receive a message (12₁, 12₂) to be forwarded to a receiving node (UE; ED);
wherein the relay is configured to perform power-control in the band (fₒᵤₜ) used for forwarding the message (12₁, 12₂) based on a signal power (Pᵢₙ) of the received message (12₁, 12₂); and
wherein the relay is configured to control the power (Pₒᵤₜ) of the forwarded message (12₁, 12₂) so as to correspond to one of a multitude of power levels (L₀-L₉).

4. A relay (90; 120) configured to operate in a wireless communications network comprising at least one band (fᵢₙ, fₒᵤₜ) for transmitting messages (12₁, 12₂);
wherein the relay is configured to receive a message (12₁, 12₂) to be forwarded to a receiving node (UE; ED);
wherein the relay is configured to perform power-control in the band (fₒᵤₜ) used for forwarding the message (12₁, 12₂) based on a signal power (Pᵢₙ) of the received message (12₁, 12₂); and
wherein the wireless communications network comprises a plurality of bands (Δf₁, Δf₄), wherein the message (12₁, 12₂) to be forwarded is one of a plurality of messages (12₁, 12₂) to be forwarded, wherein the relay is configured to forward a message (12₁, 12₂) of the plurality of messages (12₁, 12₂) to be forwarded in each of the plurality of bands (Δf₁, Δf₄), wherein the relay is configured to perform power-control in each of the plurality of bands (Δf₁, Δf₄).

5. A relay (90; 120) configured to operate in a wireless communications network comprising at least one band (fᵢₙ, fₒᵤₜ) for transmitting messages (12₁, 12₂);
wherein the relay is configured to receive a message (12₁, 12₂) to be forwarded to a receiving node (UE; ED); and
wherein the relay is configured to perform power-control in the band (fₒᵤₜ) used for forwarding the message (12₁, 12₂) based on a signal power (Pᵢₙ) of the received message (12₁, 12₂); and
wherein the wireless communications network comprises a plurality of bands (Δf₁, Δf₄), wherein the relay is configured to associate a first band (Δf₁) of the plurality of bands to a first apparatus (UE₁) that transmits or receives the message (12₁) to be forwarded being a first message, wherein the relay is configured to associate a second band (Δf₄) of the plurality of bands to a second apparatus (UE₂) that transmits or receives a second message (12₂).

6. A relay (90; 120) configured to operate in a wireless communications network comprising at least one band (fᵢₙ, fₒᵤₜ) for transmitting messages (12₁, 12₂);
wherein the relay is configured to receive a message (12₁, 12₂) to be forwarded to a receiving node (UE; ED);
wherein the relay is configured to perform power-control in the band (fₒᵤₜ) used for forwarding the message (12₁, 12₂) based on a signal power (Pᵢₙ) of the received message (12₁, 12₂); and
wherein the relay is configured to adapt a transmission power (P₂) used for forwarding the message (12₁, 12₂) based on information contained in the message (12₁, 12₂) to be forwarded or received from a node to which the message (12₁, 12₂) is forwarded.

7. A relay (10; 30; 30'; 30"; 40; 40'; 40"; 50; 60; 120) configured to operate in a wireless communications network;
wherein the relay is configured to receive a message (12) to be forwarded to a receiving node (UE; ED); and
wherein the relay is configured to evaluate a channel quality to the receiving node (UE; ED) and to discard (24a) the message (12) from forwarding when the channel quality is below a transmission threshold value; and/or
wherein the relay is configured to evaluate a reception quality (19) of the received message and to discard (24a) the message from forwarding when the reception quality (19) is below a reception threshold value;
wherein the relay is configured to forward the message (12₁, 12₂) using a maximum ratio transmission of the message (12₁, 12₂) for at least two receiving nodes.

8. A relay (90; 120) configured to operate in a wireless communications network comprising at least one band (fᵢₙ, fₒᵤₜ) for transmitting messages (12₁, 12₂);
wherein the relay is configured to receive a message (12₁, 12₂) to be forwarded to a receiving node (UE; ED);
wherein the relay is configured to perform power-control in the band (fₒᵤₜ) used for forwarding the message (12₁, 12₂) based on a signal power (Pᵢₙ) of the received message (12₁, 12₂); and
wherein the relay is configured to forward the message (12₁, 12₂) using a maximum ratio transmission of the message (12₁, 12₂) for at least two receiving nodes.

9. Method for operating a relay configured to operate in a wireless communications network, the method comprising:
receiving a message (12) to be forwarded to a receiving node (UE; ED) with the relay; and
evaluating a channel quality to the receiving node (UE; ED) and discarding (24a) the message (12) from forwarding when the channel quality is below a transmission threshold value; and/or
evaluating a reception quality (19) of the received message (12) and discarding (24a) the message (12) from forwarding when the reception quality (19) is below a reception threshold value;
evaluating a priority of the message (12) to be forwarded and to discard (24a) the message (12) to be forwarded when the channel quality is below the transmission threshold value and when the message (12) to be forwarded comprises a priority below a priority threshold value; or adapting the transmission threshold value based on the priority.

10. Method for operating a relay configured to operate in a wireless communications network, the method comprising:
receiving a message (12) to be forwarded to a receiving node (UE; ED) with the relay; and
evaluating a channel quality to the receiving node (UE; ED) and discarding (24a) the message (12) from forwarding when the channel quality is below a transmission threshold value; and/or
evaluating a reception quality (19) of the received message (12) and discarding (24a) the message (12) from forwarding when the reception quality (19) is below a reception threshold value;
forwarding the message (12₁, 12₂) using a maximum ratio transmission of the message (12₁, 12₂) for at least two receiving nodes.

11. Method for operating a relay configured to operate in a wireless communications network comprising at least one band for transmitting messages (12₁, 12₂), the method comprising:
receiving a message (12₁, 12₂) to be forwarded to a receiving node (UE; ED) with the relay;
performing power-control in the band used for forwarding the message (12₁, 12₂) based on a signal power of the received message (12₁, 12₂); and
controlling the power (Pₒᵤₜ) of the forwarded message (12₁, 12₂) so as to be high when a signal power (Pᵢₙ) of the received message (12₁, 12₂) is high and to control the power (Pₒᵤₜ) of the forwarded message (12₁, 12₂) so as to be low or such that the message (12₁, 12₂) is not transmitted when the signal power (Pᵢₙ) of the received message (12₁, 12₂) is low.

12. Method for operating a relay configured to operate in a wireless communications network comprising at least one band for transmitting messages (12₁, 12₂), the method comprising:
receiving a message (12₁, 12₂) to be forwarded to a receiving node (UE; ED) with the relay;
performing power-control in the band used for forwarding the message (12₁, 12₂) based on a signal power of the received message (12₁, 12₂); and
controlling the power (Pₒᵤₜ) of the forwarded message (12₁, 12₂) so as to correspond to one of a multitude of power levels (L₀-L₉).

13. Method for operating a relay configured to operate in a wireless communications network comprising at least one band for transmitting messages (12₁, 12₂) and wherein the wireless communications network comprises a plurality of bands (Δf₁, Δf₄), the method comprising:
receiving a message (12₁, 12₂) to be forwarded to a receiving node (UE; ED) with the relay, wherein the message (12₁, 12₂) to be forwarded is one of a plurality of messages (12₁, 12₂) to be forwarded;
performing power-control in the band used for forwarding the message (12₁, 12₂) based on a signal power of the received message (12₁, 12₂); and
forwarding a message (12₁, 12₂) of the plurality of messages (12₁, 12₂) to be forwarded in each of the plurality of bands (Δf₁, Δf₄), and performing power-control in each of the plurality of bands (Δf₁, Δf₄).

14. Method for operating a relay configured to operate in a wireless communications network comprising at least one band for transmitting messages (12₁, 12₂), wherein the wireless communications network comprises a plurality of bands (Δf₁,Δf₄), the method comprising:
receiving a message (12₁, 12₂) to be forwarded to a receiving node (UE; ED) with the relay;
performing power-control in the band used for forwarding the message (12₁, 12₂) based on a signal power of the received message (12₁, 12₂); And
associating a first band (Δf₁) of the plurality of bands to a first apparatus (UE₁) that transmits or receives the message (12₁) to be forwarded being a first message, and associating a second band (Δf₄) of the plurality of bands to a second apparatus (UE₂) that transmits or receives a second message (12₂).

15. Method for operating a relay configured to operate in a wireless communications network comprising at least one band for transmitting messages (12₁, 12₂), the method comprising:
receiving a message (12₁, 12₂) to be forwarded to a receiving node (UE; ED) with the relay;
performing power-control in the band used for forwarding the message (12₁, 12₂) based on a signal power of the received message (12₁, 12₂); and
adapting a transmission power (P₂) used for forwarding the message (12₁, 12₂) based on information contained in the message (12₁, 12₂) to be forwarded or received from a node to which the message (12₁, 12₂) is forwarded.

16. Method for operating a relay configured to operate in a wireless communications network comprising at least one band for transmitting messages (12₁, 12₂), the method comprising:
receiving a message (12₁, 12₂) to be forwarded to a receiving node (UE; ED) with the relay;
performing power-control in the band used for forwarding the message (12₁, 12₂) based on a signal power of the received message (12₁, 12₂); and
forwarding the message (12₁, 12₂) using a maximum ratio transmission of the message (12₁, 12₂) for at least two receiving nodes.

17. A non-transitory computer program product comprising a computer readable medium storing instructions which, wherein the instructions, when executed on a computer, cause the computer to carry out the method of one of claims 9 to 16.

## Patentansprüche

1. Ein Relais (10; 30; 30'; 30"; 40; 40'; 40"; 50; 60; 120), das konfiguriert ist, in einem Drahtloskommunikationsnetz zu arbeiten;
wobei das Relais konfiguriert ist, eine Mitteilung (12) zu empfangen, die an einen Empfangsknoten (UE; ED) weiterzuleiten ist; und
wobei das Relais konfiguriert ist, eine Kanalqualität zu dem Empfangsknoten (UE; ED) zu bewerten und die Weiterleitung der Mitteilung (12) zu verwerfen, wenn die Kanalqualität unter einem Übertragungsschwellenwert liegt und/oder
wobei das Relais konfiguriert ist, eine Empfangsqualität (19) der empfangenen Mitteilung zu bewerten und die Weiterleitung der Mitteilung (12) zu verwerfen (24a), wenn die Empfangsqualität (19) unter einem Empfangsschwellenwert liegt;
wobei das Relais konfiguriert ist, eine Priorität der Mitteilung (12), die weiterzuleiten ist, zu bewerten und die Weiterleitung der Mitteilung (12) zu verwerfen (24a), wenn die Kanalqualität unter dem Übertragungsschwellenwert liegt und wenn die Mitteilung (12), die weiterzuleiten ist, eine Priorität unter einem Prioritätsschwellenwert aufweist; oder wobei das Relais konfiguriert ist, den Übertragungsschwellenwert basierend auf der Priorität anzupassen.

2. Ein Relais (90; 120), das konfiguriert ist, in einem Drahtloskommunikationsnetz zu arbeiten, das zumindest ein Band (fᵢₙ, fₒᵤₜ) zum Übertragen von Mitteilungen (12₁, 12₂) aufweist;
wobei das Relais konfiguriert ist, eine Mitteilung (12₁, 12₂) zu empfangen, die an einen Empfangsknoten (UE; ED) weiterzuleiten ist;
wobei das Relais konfiguriert ist, Leistungssteuerung in dem Band (fout), das zum Weiterleiten der Mitteilung (12₁, 12₂) verwendet wird, basierend auf einer Signalleistung (Pᵢₙ) der empfangenen Mitteilung (12₁, 12₂) durchzuführen; und
wobei das Relais konfiguriert ist, die Leistung (Pₒᵤₜ) der weitergeleiteten Mitteilung (12₁, 12₂) zu steuern, so dass dieselbe hoch ist, wenn eine Signalleistung (Pᵢₙ) der empfangenen Mitteilung (12₁, 12₂) hoch ist, und die Leistung (Pₒᵤₜ) der weitergeleiteten Mitteilung (12₁, 12₂) zu steuern, so dass dieselbe niedrig ist, oder so dass die Mitteilung (12₁, 12₂) nicht übertragen wird, wenn die Signalleistung (Pᵢₙ) der empfangenen Mitteilung (12₁, 12₂) niedrig ist.

3. Ein Relais (90; 120), das konfiguriert ist, in einem Drahtloskommunikationsnetz zu arbeiten, das zumindest ein Band (fᵢₙ, fₒᵤₜ) zum Übertragen von Mitteilungen (12₁, 12₂) aufweist;
wobei das Relais konfiguriert ist, eine Mitteilung (12₁, 12₂) zu empfangen, die an einen Empfangsknoten (UE; ED) weiterzuleiten ist;
wobei das Relais konfiguriert ist, Leistungssteuerung in dem Band (fₒᵤₜ), das zum Weiterleiten der Mitteilung (12₁, 12₂) verwendet wird, basierend auf einer Signalleistung (Pᵢₙ) der empfangenen Mitteilung (12₁, 12₂) durchzuführen; und
wobei das Relais konfiguriert ist, die Leistung (Pₒᵤₜ) der weitergeleiteten Mitteilung (12₁, 12₂) zu steuern, so dass dieselbe einem einer Vielzahl von Leistungspegeln (L₀-L₉) entspricht.

4. Ein Relais (90; 120), das konfiguriert ist, in einem Drahtloskommunikationsnetz zu arbeiten, das zumindest ein Band (fᵢₙ, fₒᵤₜ) zum Übertragen von Mitteilungen (12₁, 12₂) aufweist;
wobei das Relais konfiguriert ist, eine Mitteilung (12₁, 12₂) zu empfangen, die an einen Empfangsknoten (UE; ED) weiterzuleiten ist;
wobei das Relais konfiguriert ist, Leistungssteuerung in dem Band (fₒᵤₜ), das zum Weiterleiten der Mitteilung (12₁, 12₂) verwendet wird, basierend auf einer Signalleistung (Pᵢₙ) der empfangenen Mitteilung (12₁, 12₂) durchzuführen; und
wobei das Drahtloskommunikationsnetz eine Mehrzahl von Bändern (Δf₁,Δf₄) aufweist, wobei die Mitteilung (12₁, 12₂), die weiterzuleiten ist, eine einer Mehrzahl von Mitteilungen (12₁, 12₂) ist, die weiterzuleiten sind, wobei das Relais konfiguriert ist, eine Mitteilung (12₁, 12₂) der Mehrzahl von Mitteilungen (12₁, 12₂), die weiterzuleiten sind, in jedem der Mehrzahl von Bändern (Δf₁, Δf₄) weiterzuleiten, wobei das Relais konfiguriert ist, Leistungssteuerung in jedem der Mehrzahl von Bändern (Δf₁, Δf₄) durchzuführen.

5. Ein Relais (90; 120), das konfiguriert ist, in einem Drahtloskommunikationsnetz zu arbeiten, das zumindest ein Band (fᵢₙ, fₒᵤₜ) zum Übertragen von Mitteilungen aufweist;
wobei das Relais konfiguriert ist, eine Mitteilung (12₁, 12₂) zu empfangen, die an einen Empfangsknoten (UE; ED) weiterzuleiten ist; und
wobei das Relais konfiguriert ist, Leistungssteuerung in dem Band (fout), das zum Weiterleiten der Mitteilung (12₁, 12₂) verwendet wird, basierend auf einer Signalleistung (Pᵢₙ) der empfangenen Mitteilung (12₁, 12₂) durchzuführen; und
wobei das Drahtloskommunikationsnetz eine Mehrzahl von Bändern (Δf₁, Δf₄) aufweist, wobei das Relais konfiguriert ist, ein erstes Band (Δf₁) der Mehrzahl von Bändern einer ersten Vorrichtung (UE₁) zuzuordnen, die die Mitteilung (12₁), die weiterzuleiten ist, die eine erste Mitteilung ist, sendet oder empfängt, wobei das Relais konfiguriert ist, ein zweites Band (Δf₄) der Mehrzahl von Bändern einer zweiten Vorrichtung (UE₂) zuzuordnen, die eine zweite Mitteilung (12₂) sendet oder empfängt.

6. Ein Relais (90; 120), das konfiguriert ist, in einem Drahtloskommunikationsnetz zu arbeiten, das zumindest ein Band (fᵢₙ, fₒᵤₜ) zum Übertragen von Mitteilungen aufweist;
wobei das Relais konfiguriert ist, eine Mitteilung (12₁, 12₂) zu empfangen, die an einen Empfangsknoten (UE; ED) weiterzuleiten ist; und
wobei das Relais konfiguriert ist, Leistungssteuerung in dem Band (fout), das zum Weiterleiten der Mitteilung (12₁, 12₂) verwendet wird, basierend auf einer Signalleistung (Pᵢₙ) der empfangenen Mitteilung (12₁, 12₂) durchzuführen; und
wobei das Relais konfiguriert ist, eine Sendeleistung (P₂), die zum Weiterleiten der Mitteilung (12₁, 12₂) verwendet wird, basierend auf Informationen anzupassen, die in der Mitteilung (12₁ 12₂), die weiterzuleiten ist, enthalten sind oder von einem Knoten empfangen werden, an den die Mitteilung (12₁, 12₂) weitergeleitet wird.

7. Ein Relais (10; 30; 30'; 30"; 40; 40'; 40"; 50; 60; 120), das konfiguriert ist, in einem Drahtloskommunikationsnetz zu arbeiten;
wobei das Relais konfiguriert ist, eine Mitteilung (12) zu empfangen, die an einen Empfangsknoten (UE; ED) weiterzuleiten ist; und
wobei das Relais konfiguriert ist, eine Kanalqualität zu einem Empfangsknoten (UE; ED) auszuwerten und die Weiterleitung der Mitteilung (12) zu verwerfen (24a), wenn die Kanalqualität unter einem Übertragungsschwellenwert liegt; und/oder
wobei das Relais konfiguriert ist, eine Empfangsqualität (19) der empfangenen Mitteilung auszuwerten und die Weiterleitung der Mitteilung (12) zu verwerfen (24a), wenn die Empfangsqualität (19) unter einem Empfangsschwellenwert liegt;
wobei das Relais konfiguriert ist, die Mitteilung (12₁, 12₂) unter Verwendung einer Maximalverhältnisübertragung der Mitteilung (12₁, 12₂) für zumindest zwei Empfangsknoten weiterzuleiten.

8. Ein Relais (90; 120), das konfiguriert ist, in einem Drahtloskommunikationsnetz zu arbeiten, das zumindest ein Band (fᵢₙ, fₒᵤₜ) zum Übertragen von Mitteilungen aufweist;
wobei das Relais konfiguriert ist, eine Mitteilung (12₁, 12₂) zu empfangen, die an einen Empfangsknoten (UE; ED) weiterzuleiten ist; und
wobei das Relais konfiguriert ist, Leistungssteuerung in dem Band (fout), das zum Weiterleiten der Mitteilung (12₁, 12₂) verwendet wird, basierend auf einer Signalleistung (Pᵢₙ) der empfangenen Mitteilung (12₁, 12₂) durchzuführen; und
wobei das Relais konfiguriert ist, die Mitteilung (12₁, 12₂) unter Verwendung einer Maximalverhältnisübertragung der Mitteilung (12₁, 12₂) für zumindest zwei Empfangsknoten weiterzuleiten.

9. Verfahren zum Betreiben eines Relais, das konfiguriert ist, in einem Drahtloskommunikationsnetz zu arbeiten, wobei das Verfahren folgende Schritte aufweist:
Empfangen einer Mitteilung (12), die an einen Empfangsknoten (UE; ED) weiterzuleiten ist, mit dem Relais; und
Bewerten einer Kanalqualität zu dem Empfangsknoten (UE; ED) und Verwerfen (24a) der Weiterleitung der Mitteilung (12), wenn die Kanalqualität unter einem Übertragungsschwellenwert liegt und/oder
Bewerten einer Empfangsqualität (19) der empfangenen Mitteilung und Verwerfen (24a) der Weiterleitung der Mitteilung, wenn die Empfangsqualität (19) unter einem Empfangsschwellenwert liegt;
Bewerten einer Priorität der Mitteilung (12), die weiterzuleiten ist, und Verwerfen (24a) der Weiterleitung der Mitteilung (12), wenn die Kanalqualität unter dem Übertragungsschwellenwert liegt und wenn die Mitteilung (12), die weiterzuleiten ist, eine Priorität unter einem Prioritätsschwellenwert aufweist; oder Anpassen des Übertragungsschwellenwerts basierend auf der Priorität.

10. Verfahren zum Betreiben eines Relais, das konfiguriert ist, in einem Drahtloskommunikationsnetz zu arbeiten, wobei das Verfahren folgende Schritte aufweist:
Empfangen einer Mitteilung (12), die an einen Empfangsknoten (UE; ED) weiterzuleiten ist, mit dem Relais; und
Bewerten einer Kanalqualität zu einem Empfangsknoten (UE; ED) und Verwerfen (24a) der Weiterleitung der Mitteilung (12), wenn die Kanalqualität unter einem Übertragungsschwellenwert liegt; und/oder
Bewerten einer Empfangsqualität (19) der empfangenen Mitteilung und Verwerfen (24a) der Weiterleitung der Mitteilung (12), wenn die Empfangsqualität (19) unter einem Empfangsschwellenwert liegt;
Weiterleiten der Mitteilung (12₁, 12₂) unter Verwendung einer Maximalverhältnisübertragung der Mitteilung (12₁, 12₂) für zumindest zwei Empfangsknoten.

11. Verfahren zum Betreiben eines Relais, das konfiguriert ist, in einem Drahtloskommunikationsnetz zu arbeiten, das zumindest ein Band zum Übertragen von Mitteilungen (12₁, 12₂) aufweist, wobei das Verfahren folgende Schritte aufweist:
Empfangen einer Mitteilung (12₁, 12₂), die an einen Empfangsknoten (UE; ED) weiterzuleiten ist, mit dem Relais;
Durchführen einer Leistungssteuerung in dem Band (fout), das zum Weiterleiten der Mitteilung (12₁, 12₂) verwendet wird, basierend auf einer Signalleistung (Pᵢₙ) der empfangenen Mitteilung (12₁, 12₂); und
Steuern der Leistung (Pₒᵤₜ) der weitergeleiteten Mitteilung (12₁, 12₂), so dass dieselbe hoch ist, wenn eine Signalleistung (Pᵢₙ) der empfangenen Mitteilung (12₁, 12₂) hoch ist, und Steuern der Leistung (Pₒᵤₜ) der weitergeleiteten Mitteilung (12₁, 12₂), so dass dieselbe niedrig ist, oder so dass die Mitteilung (12₁, 12₂) nicht übertragen wird, wenn die Signalleistung (Pᵢₙ) der empfangenen Mitteilung (12₁, 12₂) niedrig ist.

12. Verfahren zum Betreiben eines Relais, das konfiguriert ist, in einem Drahtloskommunikationsnetz zu arbeiten, das zumindest ein Band zum Übertragen von Mitteilungen (12₁, 12₂) aufweist, wobei das Verfahren folgende Schritte aufweist:
Empfangen einer Mitteilung (12₁, 12₂), die an einen Empfangsknoten (UE; ED) weiterzuleiten ist, mit dem Relais;
Durchführen einer Leistungssteuerung in dem Band (fout), das zum Weiterleiten der Mitteilung (12₁, 12₂) verwendet wird, basierend auf einer Signalleistung (Pᵢₙ) der empfangenen Mitteilung (12₁, 12₂); und
Steuern der Leistung (Pₒᵤₜ) der weitergeleiteten Mitteilung (12₁, 12₂), so dass dieselbe einem einer Vielzahl von Leistungspegeln (L₀-L₉) entspricht.

13. Verfahren zum Betreiben eines Relais, das konfiguriert ist, in einem Drahtloskommunikationsnetz zu arbeiten, das zumindest ein Band zum Übertragen von Mitteilungen (12₁, 12₂) aufweist und wobei das Drahtioskommunikationsnetz eine Mehrzahl von Bändern (Δf₁, Δf₄) aufweist, wobei das Verfahren folgende Schritte aufweist:
Empfangen einer Mitteilung (12₁, 12₂), die an einen Empfangsknoten (UE; ED) weiterzuleiten ist, mit dem Relais, wobei die Mitteilung (12₁, 12₂), die weiterzuleiten ist, eine einer Mehrzahl von Mitteilungen (12₁, 12₂) ist, die weiterzuleiten sind;
Durchführen einer Leistungssteuerung in dem Band (fout), das zum Weiterleiten der Mitteilung (12₁, 12₂) verwendet wird, basierend auf einer Signalleistung (Pᵢₙ) der empfangenen Mitteilung (12₁, 12₂); und
Weiterleiten einer Mitteilung (12₁, 12₂) der Mehrzahl von Mitteilungen (12₁, 12₂), die weiterzuleiten sind, in jedem der Mehrzahl von Bändern (Δf₁, Δf₄), und Durchführen einer Leistungssteuerung in jedem der Mehrzahl von Bändern (Δf₁, Δf₄).

14. Verfahren zum Betreiben eines Relais, das konfiguriert ist, in einem Drahtloskommunikationsnetz zu arbeiten, das zumindest ein Band zum Übertragen von Mitteilungen (12₁, 12₂) aufweist, wobei das Drahtloskommunikationsnetz eine Mehrzahl von Bändern (Δf₁, Δf₄) aufweist, wobei das Verfahren folgende Schritte aufweist:
Empfangen einer Mitteilung (12₁, 12₂), die an einen Empfangsknoten (UE; ED) weiterzuleiten ist, mit dem Relais; und
Durchführen einer Leistungssteuerung in dem Band (fₒᵤₜ), das zum Weiterleiten der Mitteilung (12₁, 12₂) verwendet wird, basierend auf einer Signalleistung (Pᵢₙ) der empfangenen Mitteilung (12₁, 12₂); und
Zuordnen eines ersten Bands (Δf₁) der Mehrzahl von Bändern zu einer ersten Vorrichtung (UE₁), die die Mitteilung (12₁), die weiterzuleiten ist, die eine erste Mitteilung ist, sendet oder empfängt, und Zuordnen eines zweiten Bands (Δf₄) der Mehrzahl von Bändern zu einer zweiten Vorrichtung (UE₂), die eine zweite Mitteilung (12₂) sendet oder empfängt.

15. Verfahren zum Betreiben eines Relais, das konfiguriert ist, in einem Drahtloskommunikationsnetz zu arbeiten, das zumindest ein Band zum Übertragen von Mitteilungen (12₁, 12₂) aufweist, wobei das Verfahren folgende Schritte aufweist:
Empfangen einer Mitteilung (12₁, 12₂), die an einen Empfangsknoten (UE; ED) weiterzuleiten ist, mit dem Relais; und
Durchführen einer Leistungssteuerung in dem Band (fout), das zum Weiterleiten der Mitteilung (12₁, 12₂) verwendet wird, basierend auf einer Signalleistung (Pᵢₙ) der empfangenen Mitteilung (12₁, 12₂); und
Anpassen einer Übertragungsleistung (P₂), die zum Weiterleiten der Mitteilung (12₁, 12₂) verwendet wird, basierend auf Informationen, die in der Mitteilung (12₁, 12₂), die weiterzuleiten ist, enthalten sind oder von einem Knoten empfangen werden, an den die Mitteilung (12₁, 12₂) weitergeleitet wird.

16. Verfahren zum Betreiben eines Relais, das konfiguriert ist, in einem Drahtloskommunikationsnetz zu arbeiten, das zumindest ein Band zum Übertragen von Mitteilungen (12₁, 12₂) aufweist, wobei das Verfahren folgende Schritte aufweist:
Empfangen einer Mitteilung (12₁, 12₂), die an einen Empfangsknoten (UE; ED) weiterzuleiten ist, mit dem Relais; und
Durchführen einer Leistungssteuerung in dem Band, das zum Weiterleiten der Mitteilung (12₁, 12₂) verwendet wird, basierend auf einer Signalleistung der empfangenen Mitteilung (12₁, 12₂); und
Weiterleiten der Mitteilung (12₁, 12₂) unter Verwendung einer Maximalverhältnisübertragung der Mitteilung (12₁, 12₂) für zumindest zwei Empfangsknoten.

17. Ein nichtflüchtiges Computerprogrammprodukt, das ein computerlesbares Medium aufweist, das Anweisungen speichert, wobei die Anweisungen, wenn sie auf einem Computer ausgeführt werden, bewirken, dass der Computer das Verfahren gemäß einem der Ansprüche 9 bis 16 durchführt.

## Revendications

1. Relais (10; 30; 30'; 30"; 40; 40'; 40"; 50; 60; 120) configuré pour fonctionner dans un réseau de communications sans fil;
dans lequel le relais est configuré pour recevoir un message (12) à transmettre à un nœud de réception (UE; ED); et
dans lequel le relais est configuré pour évaluer une qualité de canal vers le nœud de réception (UE; ED) et pour rejeter (24a) la transmission du message (12) lorsque la qualité de canal est inférieure à une valeur de seuil de transmission; et/ou
dans lequel le relais est configuré pour évaluer une qualité de réception (19) du message reçu et pour rejeter (24a) la transmission du message lorsque la qualité de réception (19) est inférieure à une valeur de seuil de réception;
dans lequel le relais est configuré pour évaluer une priorité du message (12) à transmettre et pour rejeter (24a) la transmission du message (12) lorsque la qualité du canal est inférieure à la valeur de seuil de transmission et lorsque le message (12) à transmettre comprend une priorité inférieure à une valeur de seuil de priorité; ou dans lequel le relais est configuré pour adapter la valeur de seuil de transmission sur base de la priorité.

2. Relais (90; 120) configuré pour fonctionner dans un réseau de communications sans fil comprenant au moins une bande (fᵢₙ, fₒᵤₜ) pour la transmission de messages (12₁; 12₂);
dans lequel le relais est configuré pour recevoir un message (12₁, 122) à transmettre à un nœud de réception (UE; ED);
dans lequel le relais est configuré pour effectuer une régulation de la puissance dans la bande (fₒᵤₜ) utilisée pour la transmission du message (12₁, 12₂) sur base d'une puissance de signal (Pᵢₙ) du message reçu (12₁, 12₂); et
dans lequel le relais est configuré pour effectuer une régulation de la puissance (Pₒᵤₜ) du message transmis (12₁, 12₂) de sorte qu'elle soit élevée lorsqu'une puissance de signal (Pᵢₙ) du message reçu (12₁, 12₂) est élevée et pour réguler la puissance (Pₒᵤₜ) du message transmis (12₁, 12₂) de sorte qu'elle soit faible ou de sorte que le message (12₁, 12₂) ne soit pas transmis lorsque la puissance de signal (Pᵢₙ) du message reçu (12₁, 12₂) est faible.

3. Relais (90; 120) configuré pour fonctionner dans un réseau de communications sans fil comprenant au moins une bande (fᵢₙ, fₒᵤₜ) pour la transmission de messages (12₁, 12₂);
dans lequel le relais est configuré pour recevoir un message (12₁, 12₂) à transmettre à un nœud de réception (UE; ED);
dans lequel le relais est configuré pour effectuer une régulation de la puissance dans la bande (fₒᵤₜ) utilisée pour la transmission du message (12₁, 12₂) sur base d'une puissance de signal (Pᵢₙ) du message reçu (12₁, 12₂); et
dans lequel le relais est configuré pour réguler la puissance (Pₒᵤₜ) du message transmis (12₁, 12₂) de manière qu'elle corresponde à l'un parmi une multitude de niveaux de puissance (L₀-L₉).

4. Relais (90; 120) configuré pour fonctionner dans un réseau de communications sans fil comprenant au moins une bande (fᵢₙ, fₒᵤₜ) pour la transmission de messages (12₁, 12₂);
dans lequel le relais est configuré pour recevoir un message (12₁, 12₂) à transmettre à un nœud de réception (UE; ED);
dans lequel le relais est configuré pour effectuer une régulation de la puissance dans la bande (fₒᵤₜ) utilisée pour la transmission du message (12₁, 12₂) sur base d'une puissance de signal (Pᵢₙ) du message reçu (12₁, 12₂); et
dans lequel le réseau de communications sans fil comprend une pluralité de bandes (Δf₁, Δf₄), dans lequel le message (12₁, 12₂) à transmettre est l'un parmi une pluralité de messages (12₁, 12₂) à transmettre, dans lequel le relais est configuré pour transmettre un message (12₁, 12₂) parmi la pluralité de messages (12₁, 12₂) à transmettre dans chacune de la pluralité de bandes (Δf₁, Δf₄), dans lequel le relais est configuré pour effectuer une régulation de la puissance dans chacune de la pluralité de bandes (Δf₁, Δf₄).

5. Relais (90; 120) configuré pour fonctionner dans un réseau de communications sans fil comprenant au moins une bande (fᵢₙ, fₒᵤₜ) pour la transmission de messages (12₁, 12₂);
dans lequel le relais est configuré pour recevoir un message (12₁, 122) à transmettre à un nœud de réception (UE; ED); et
dans lequel le relais est configuré pour effectuer une régulation de la puissance dans la bande (fₒᵤₜ) utilisée pour la transmission du message (12₁, 12₂) sur base d'une puissance de signal (Pᵢₙ) du message reçu (12₁, 12₂); et
dans lequel le réseau de communications sans fil comprend une pluralité de bandes (Δf₁, Δf₄), dans lequel le relais est configuré pour associer une première bande (Δf₁) de la pluralité de bandes à un premier appareil (UE₁) qui transmet ou reçoit le message (12₁) à transmettre comme un premier message, dans lequel le relais est configuré pour associer une deuxième bande (Δf₄) de la pluralité de bandes à un deuxième appareil (UE₂) qui transmet ou reçoit un deuxième message (12₂).

6. Relais (90; 120) configuré pour fonctionner dans un réseau de communications sans fil comprenant au moins une bande (fᵢₙ, fₒᵤₜ) pour la transmission de messages (12₁, 12₂);
dans lequel le relais est configuré pour recevoir un message (12₁, 12₂) à transmettre à un nœud de réception (UE; ED);
dans lequel le relais est configuré pour effectuer une régulation de la puissance dans la bande (fₒᵤₜ) utilisée pour la transmission du message (12₁, 12₂) sur base d'une puissance de signal (Pᵢₙ) du message reçu (12₁, 12₂); et
dans lequel le relais est configuré pour adapter une puissance de transmission (P₂) utilisée pour la transmission du message (12₁, 122) sur base des informations contenues dans le message (12₁, 12₂) à transmettre ou à recevoir d'un nœud auquel est transmis le message (12₁, 12₂).

7. Relais (10; 30; 30'; 30"; 40; 40'; 40"; 50; 60; 120) configuré pour fonctionner dans un réseau de communications sans fil;
dans lequel le relais est configuré pour recevoir un message (12) à transmettre à un nœud de réception (UE; ED); et
dans lequel le relais est configuré pour évaluer une qualité de canal vers le nœud de réception (UE; ED) et pour rejeter (24a) la transmission du message (12) lorsque la qualité de canal est inférieure à une valeur de seuil de transmission; et/ou
dans lequel le relais est configuré pour évaluer une qualité de réception (19) du message reçu et pour rejeter (24a) la transmission du message lorsque la qualité de réception (19) est inférieure à une valeur de seuil de réception;
dans lequel le relais est configuré pour transmettre le message (12₁, 12₂) à l'aide d'une transmission selon un rapport maximum du message (12₁, 12₂) pour au moins deux nœuds de réception.

8. Relais (90; 120) configuré pour fonctionner dans un réseau de communications sans fil comprenant au moins une bande (fᵢₙ, fₒᵤₜ) pour la transmission de messages (12₁, 12₂);
dans lequel le relais est configuré pour recevoir un message (12₁, 12₂) à transmettre à un nœud de réception (UE; ED);
dans lequel le relais est configuré pour effectuer une régulation de la puissance dans la bande (fₒᵤₜ) utilisée pour la transmission du message (12₁, 12₂) sur base d'une puissance de signal (Pᵢₙ) du message reçu (12₁, 12₂); et
dans lequel le relais est configuré pour transmettre le message (12₁, 122) à l'aide d'une transmission selon un rapport maximum du message (12₁, 12₂) pour au moins deux nœuds de réception.

9. Procédé pour faire fonctionner un relais configuré pour fonctionner dans un réseau de communications sans fil, le procédé comprenant le fait de:
recevoir un message (12) à transmettre à un nœud de réception (UE; ED) par le relais; et
évaluer une qualité de canal vers le nœud de réception (UE; ED) et rejeter (24a) la transmission du message (12) lorsque la qualité de canal est inférieure à une valeur de seuil de transmission; et/ou
évaluer une qualité de réception (19) du message reçu (12) et rejeter (24a) la transmission du message (12) lorsque la qualité de réception (19) est inférieure à une valeur de seuil de réception;
évaluer une priorité du message (12) à transmettre et rejeter (24a) la transmission du message (12) lorsque la qualité du canal est inférieure à la valeur de seuil de transmission et lorsque le message (12) à transmettre comprend une priorité inférieure une valeur de seuil de priorité; ou adapter la valeur de seuil de transmission sur base de la priorité.

10. Procédé pour faire fonctionner un relais configuré pour fonctionner dans un réseau de communications sans fil, le procédé comprenant le fait de:
recevoir un message (12) à transmettre à un nœud de réception (UE; ED) par le relais; et
évaluer une qualité de canal vers le nœud de réception (UE; ED) et rejeter (24a) la transmission du message (12) lorsque la qualité de canal est inférieure à une valeur de seuil de transmission; et/ou
évaluer une qualité de réception (19) du message reçu (12) et rejeter (24a) la transmission du message (12) lorsque la qualité de réception (19) est inférieure à une valeur de seuil de réception;
transmettre le message (12₁, 12₂) à l'aide d'une transmission selon un rapport maximum du message (12₁, 12₂) pour au moins deux nœuds de réception.

11. Procédé pour faire fonctionner un relais configuré pour fonctionner dans un réseau de communications sans fil comprenant au moins une bande pour la transmission de messages (12₁, 12₂), le procédé comprenant le fait de:
recevoir un message (12₁, 12₂) à transmettre à un nœud de réception (UE; ED) par le relais;
effectuer une régulation de puissance dans la bande utilisée pour la transmission du message (12₁, 12₂) sur base d'une puissance de signal du message reçu (12₁, 12₂); et
réguler la puissance (Pₒᵤₜ) du message transmis (12₁, 12₂) de sorte qu'elle soit élevée lorsqu'une puissance de signal (Pᵢₙ) du message reçu (12₁, 12₂) est élevée et réguler la puissance (Pₒᵤₜ) du message transmis (12₁, 12₂) de sorte qu'elle soit faible ou de sorte que le message (12₁, 12₂) ne soit pas transmis lorsque la puissance de signal (Pᵢₙ) du message reçu (12₁, 12₂) est faible.

12. Procédé pour faire fonctionner un relais configuré pour fonctionner dans un réseau de communications sans fil comprenant au moins une bande pour la transmission de messages (12₁, 12₂), le procédé comprenant le fait de:
recevoir un message (12₁, 12₂) à transmettre à un nœud de réception (UE; ED) par le relais;
effectuer une régulation de puissance dans la bande utilisée pour la transmission du message (12₁, 12₂) sur base d'une puissance de signal du message reçu (12₁, 12₂); et
réguler la puissance (Pₒᵤₜ) du message transmis (12₁, 12₂) de sorte qu'elle corresponde à l'un parmi une multitude de niveaux de puissance (L₀-L₉).

13. Procédé pour faire fonctionner un relais configuré pour fonctionner dans un réseau de communications sans fil comprenant au moins une bande pour la transmission de messages (12₁, 12₂) et dans lequel le réseau de communications sans fil comprend une pluralité de bandes (Δf₁, Δf₄), le procédé comprenant le fait de:
recevoir un message (12₁, 12₂) à transmettre à un nœud de réception (UE; ED) par le relais, où le message (12₁, 12₂) à transmettre est l'un parmi une pluralité de messages (12₁, 12₂) à transmettre;
effectuer une régulation de puissance dans la bande utilisée pour la transmission du message (12₁, 12₂) sur base d'une puissance de signal du message reçu (12₁, 12₂); et
transmettre un message (12₁, 12₂) parmi la pluralité de messages (12₁, 122) à transmettre dans chacune de la pluralité de bandes (Δf₁, Δf₄), et effectuer une régulation de puissance dans chacune de la pluralité de bandes (Δf₁, Δf₄).

14. Procédé pour faire fonctionner un relais configuré pour fonctionner dans un réseau de communications sans fil comprenant au moins une bande pour la transmission de messages (12₁, 12₂), dans lequel le réseau de communications sans fil comprend une pluralité de bandes (Δf₁, Δf₄), le procédé comprenant le fait de:
recevoir un message (12₁, 12₂) à transmettre à un nœud de réception (UE; ED) par le relais;
effectuer une régulation de puissance dans la bande utilisée pour la transmission du message (12₁, 12₂) sur base d'une puissance de signal du message reçu (12₁, 12₂); et
associer une première bande (Δf₁) de la pluralité de bandes à un premier appareil (UE₁) qui transmet ou reçoit le message (12₁) à transmettre comme un premier message, et associer une deuxième bande (Δf₄) de la pluralité de bandes à un deuxième appareil (UE₂) qui transmet ou reçoit un deuxième message (122).

15. Procédé pour faire fonctionner un relais configuré pour fonctionner dans un réseau de communications sans fil comprenant au moins une bande pour la transmission de messages (12₁, 12₂), le procédé comprenant le fait de:
recevoir un message (12₁, 12₂) à transmettre à un nœud de réception (UE; ED) par le relais;
effectuer une régulation de puissance dans la bande utilisée pour la transmission du message (12₁, 12₂) sur base d'une puissance de signal du message reçu (12₁, 12₂); et
adapter une puissance de transmission (P₂) utilisée pour la transmission du message (12₁, 12₂) sur base des informations contenues dans le message (12₁, 12₂) à transmettre ou à recevoir d'un nœud auquel est transmis le message (12₁, 12₂).

16. Procédé pour faire fonctionner un relais configuré pour fonctionner dans un réseau de communications sans fil comprenant au moins une bande pour la transmission de messages (12₁, 12₂), le procédé comprenant le fait de:
recevoir un message (12₁, 12₂) à transmettre à un nœud de réception (UE; ED) par le relais;
effectuer une régulation de puissance dans la bande utilisée pour la transmission du message (12₁, 12₂) sur base d'une puissance de signal du message reçu (12₁, 12₂); et
transmettre le message (12i, 12₂) à l'aide d'une transmission selon un rapport maximum du message (12₁, 12₂) pour au moins deux nœuds de réception.

17. Produit de programme d'ordinateur non transitoire comprenant un support lisible par ordinateur mémorisant des instructions, dans lequel les instructions, lorsqu'elles sont exécutées sur un ordinateur, amènent l'ordinateur à réaliser le procédé selon l'une des revendications 9 à 16.
